# EUROPEAN PATENT SPECIFICATION

(11) **EP 0 588 533 B1**
(45) Date of publication and mention of the grant of the patent: **12.08.1998**
(21) Application number: 93306944.5
(22) Date of filing: 02.09.1993
(51) Int. Cl.: C09D 11/10, B41M 1/26

(54) **Printed thermoplastic resin products and method for printing such products**
Bedruckte Produkte aus thermoplastischem Harz und Verfahren zum Bedrucken solcher Produkte
Produits de résine thermoplastique imprimés et méthode d'impression

(30) Priority: 14.09.1992 JP 269142/92
(43) Date of publication of application: 23.03.1994
(73) Proprietor: HAYAKAWA RUBBER COMPANY LIMITED, Fukuyama City, Hiroshima 721 (JP); Yoshino Kogyosho Co., Ltd., Tokyo 136-8531 (JP)
(72) Inventor: Tanaka, Ban, Toyota, Aichi (JP); Nii, Hiroki, Fukuyama, Hiroshima (JP); Yamada, Kosaku, Tempaku-Ku, Nagoya, Aichi (JP); Kushida, Hideo, Yachiyo-Shi, Chiba (JP); Miya, Takashi, Kamagaya-Shi, Chiba (JP); Koshio, Shuichi, Sakura-Shi, Chiba (JP); Hayakawa, Tadashi, Hanamigawa-Ku, Chiba-Shi, Chiba (JP)
(74) Representative: Crouch, David John

(56) References cited:
- EP-A- 0 243 605
- DE-A- 3 303 784
- US-A- 5 091 440

## Description

The present invention relates to a method for printing a plastics material product with a specific radiation-curable type printing ink capable of directly printing trade names, designs, explanatory notes, bar codes, etc. on the plastics resin product, if desired on a roughened surface of the plastics resin product, for displaying and decorating. The printed ink quickly curing on a high-speed drying line to form a dried film capable of maintaining the quality required at the distribution stage. After collection of the used product, the film can be dissolved or removed in a membranous form with an aqueous alkaline solution to recover the base materials in a clean condition.

Furthermore, the present invention relates to a method for printing specific thermoplastics material products such as polyethylene terephthalate resin products, with a specific radiation-curable printing ink capable of being dissolved or removed as a cured ink film in an aqueous alkaline solution from the printed products.

The present invention further relates to a printed thermoplastics material product which is painted with a radiation-curable type printing ink capable of directly marking trade names, designs, explanatory notes, bar codes, etc. thereon for displaying and decorating, quickly curing on a high-speed drying line to form a dried film maintainable for the quality required at the distribution stage. After collection of the used product, dissolving or removing as a cured ink film with an aqueous alkaline solution to recover the base materials in a clean condition.

The present invention also relates to a method for eliminating or removing the radiation-curable type printing ink from the printed thermoplastics material products such as polyethylene terephthalate resins, wherein the radiation-curable type printing ink is capable of directly printing trade names, designs, explanatory notes, bar codes, etc. on the thermoplastics resin product for displaying and decorating, quickly curing the printed ink on a high-speed drying line to form a dried film capable of maintaining the quality required at the distribution stage. After collection of the used product, the film can be dissolved or removed in a membranous form with an aqueous alkaline solution to recover the base materials in a clean condition.

The thermoplastics resin product, particularly polyethylene terephthalate product, has been utilised especially as a container for cosmetics, liquid seasonings, drinks such as beer or cola and medicine since it is free from toxicity, superior in gas-barrier ability and water-impermeability to other synthetic resins and has an exterior appearance that is similar to that of glass. In many cases an explanatory note and name of commodity have been printed on the side wall of the thermoplastics resin container with the printing ink made from ultraviolet-curable type resin as a vehicle.

In recent years, problems with rubbish incineration and environmental pollution, caused by waste plastics material products, have attracted public attention and serious concerns have been growing with regard to collection, restoration and re-formation of the plastics material product waste. However, the used plastics material product so collected presents difficulties in various aspects for re-use. Therefore, the majority of plastics material product wastes have simply been melted down for re-use and used in a limited range of recycle purposes. The main reason for this is that the so collected waste product has printings for decoration and other purposes and the ink printed on it adversely affects the quality of the plastics material product which is re-cycled from the printed plastics material product so collected as a starting material.

Previous ink compositions which do not have the advantages of the present invention are described in EP-A-0243605, DE-A-3303784 and US-A-5091440.

The present invention uses a specific ink for printing on a plastics material product in order to ensure easy recycling of the collected waste plastics material product and to solve the problems relating to rubbish incineration or environmental pollution, caused by the waste plastics material product. The present invention provides a practical method for printing on the plastics material product with the specific ink and removing the printed ink from the collected waste plastics material product.

The present invention relates to thermoplastics resin products printed on with the specific ink which ensures versatile utilisation of the plastics material product to be collected after its use.

Accordingly, the present invention is directed to thermoplastics resin products which are (i) printed on with a printing ink having, as a base, a radiation-curable type ink composition comprising a vehicle mixture comprising:
(A) at least one ingredient selected from the group consisting of a linear polyester oligomer substantially free of an acid group and free of a polymerisable double bond on the linear polyester chain wherein 1 to 10 double bonds are pendent from the linear polyester chain; a linear polyester polymer substantially free of an acid group and free of a polymerisable double bond on the linear polyester chain wherein 1 to 10 double bonds are pendent from the linear polyester chain: and mixtures thereof,
(B) at least one ingredient selected from the group consisting of a one double bond-containing carboxylic acid wherein the acid has at least one acid group, a carboxylic ester of the said acid, a carboxylic amide of the said acid, and mixtures thereof,
(C) a double bond-containing polycarboxylic ester wherein 2 to 10 acid groups are present and at least 2 double bonds are pendent from the carboxylic ester having 2 to 10 acid groups, and
(D) at least one ingredient selected from the group consisting of a double bond-containing fluorinated carboxylic ester, a block copolymer comprising a fluorinated alkyl group-containing polymer segment and a methacrylic or acrylic polymer segment, a block copolymer comprising a siloxane group-containing polymer segment and a methacrylic or acrylic polymer segment, and mixtures thereof,
wherein the acid value of the vehicle mixture is from 5 to 100, and (ii) then treated with radiation on the printed surface thereof to harden the radiation-curable ingredients in the printing ink.

In another aspect, the present invention is directed to thermoplastics resin products which are (i) printed with a printing ink having, as a base, a radiation-curable type ink composition comprising the vehicle mixture comprising from the said components (A) to (B) in admixture with:
(E) a double bond-containing carboxylic ester, having at least 2 double bonds and free of an acid group, provided that it is excluded from the above-mentioned component (A) and
(F) at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof.

In a preferred embodiment according to the present invention, the radiation-curable type ink composition comprises the said vehicle mixture in combination with:
(i) 0 to 20 parts by weight of a photopolymerisation initiator,
(ii) 0 to 20 parts by weight of a photosensitiser and
(iii) 0 to 100 parts by weight of an organic and/or inorganic pigment per 100 parts by weight of the vehicle mixture.

According to the present invention, there may be no chance that the decorative prints such as designs or marks on the product materials dropping off or getting tainted causing damage to a trading image at the distribution stage. Furthermore, by means of treating the waste product material with an aqueous alkaline solution, to remove the prints in a filmy form, after their collection, the base materials can be restored to a clean state without any prints. The detached film contained in the alkaline waste water is also removed by filtration, dissolved as lapse of time, or caught by air separation such as cyclone in a state completely segregated from the base materials, thus it will scarcely be discharged into the environment and handling will be much easier.

In the printing method according to the present invention, printing is possible without any surface treatment of the thermoplastics resin product prior to printing but the surface of the thermoplastics resin product may be roughened or treated with flame, corona discharge or anchor coating. The radiation-curable ink according to the present invention is adhered to the plastics material product in extremely close contact due to the adhesiveness and stress-peeling preventive mechanism attributable to the low contractivity based on the structure of a double bond-containing oligomer and/or a polymer thereof. The close adhesion of the radiation-curable ink composition to the plastics body construction, even without any pretreatment, provides a remarkable advantage in curtailing production steps in an overall printing process.

The present invention is directed to thermoplastics resin products which are (i) printed with a novel printing ink and (ii) then the printed surface thereof is treated with radiation to harden the radiation-curable ingredients in the printing ink, wherein the said printing ink has, as a base, a radiation-curable type ink composition comprising the vehicle mixture containing at least the above-mentioned components (A) to (D) wherein the acid value of the vehicle mixture is from 5 to 100. In another aspect, the present invention is directed to thermoplastics resin products which are (i) printed with a novel printing ink and (ii) then the printed surface thereof is treated with radiation to harden the radiation-curable ingredients in the printing ink, wherein the said printing ink has, as a base, a radiation-curable type ink composition comprising the vehicle mixture containing at least the above-mentioned components (A) to (F) wherein the acid value of the vehicle mixture is from 5 to 100. In an embodiment, the radiation-curable type ink composition comprising the vehicle mixture may be used in combination with:
(i) 0 to 20 parts by weight of a photopolymerisation initiator,
(ii) 0 to 20 parts by weight of a photosensitiser and
(iii) 0 to 50 wt% of an organic and/or inorganic pigment per total ink composition.

In another embodiment, the present invention is also directed to thermoplastics resin products which are printed with a printing ink and then the printed surface thereof is treated with radiation to harden the radiation-curable ingredients in the printing ink, characterized in that the said printing ink has, as a base, a radiation-curable type ink composition comprising, as major vehicle ingredients,
(1) the above-mentioned (A) to (C) components and (E) to (F) components and, as the (D) component, a fluorinated double bond-containing carboxylic ester wherein the fluorine component is oriented on the surface of copolymer or polymer to give water-repellency, or
(2) the above-mentioned (A) to (C) components and (E) to (F) components and, as the (D) component, a block copolymer which comprises a surface-oriented and water-repellent fluorinated alkyl group-containing polymer segment and a methacrylic or acrylic polymer segment, or
(3) the above-mentioned (A) to (C) components and (E) to (F) components and, as the (D) component, a block copolymer which comprises a surface-oriented and water-repellent siloxane group-containing polymer segment and a methacrylic or acrylic polymer segment,
wherein the acid value of the vehicle mixture is from 5 to 100 and the ink composition preferably comprises 0 to 20 parts by weight of a photopolymerisation initiator, 0 to 20 parts by weight of a photosensitiser, and 0 to 50 wt% of an organic and/or inorganic pigment per total ink composition.

In another embodiment, the present invention also relates to thermoplastics resin products which are printed with a printing ink and then the printed surface thereof is treated with radiation to harden the radiation-curable ingredients in the printing ink, characterised in that the said printing ink has, as a base, a radiation-curable type ink composition comprising, as a major vehicle ingredient, the mixture of the above-mentioned (A) to (C) components and (E) to (F) components and, as the (D) component, two or three members selected from the group consisting of a fluorinated double bond-containing carboxylic ester wherein the fluorine component is oriented on the surface of a copolymer or polymer to give water-repellency, a block copolymer which comprises a surface-oriented and water-repellent fluorinated alkyl group-containing polymer segment and a methacrylic or acrylic polymer segment, and a block copolymer which comprises a surface-oriented and water-repellent siloxane group-containing polymer segment and a methacrylic or acrylic polymer segment, wherein the acid value of the vehicle mixture is from 5 to 100 and the ink composition comprises additionally 0 to 20 parts by weight of a photopolymerisation initiator, 0 to 20 parts by weight of a photosensitiser, and 0 to 100 parts by weight of an organic and/or inorganic pigment to 100 parts by weight of the abovementioned vehicle.

For the thermoplastics resin product, various resin products such as polyester resin products and polyolefin resin products can be utilised but, among all, the polyethylene terephthalate product is particularly preferable. The polyethylene terephthalates which can be used in the present invention are polyesters having ethylene terephthalate repeating units, which comprise, basically terephthalic acid as an acid component and ethylene glycol as a glycol component, but may contain at least one acid component and at least one glycol component for copolymers. The acid component may include isophthalic acid, diphenyl ether-4,4'-dicarboxylic acid, naphthalene-1,4- or -2,6-dicarboxylic acid, adipic acid, sebacic acid, decane-1,4-dicarboxylic acid, hexahydroterephthalic acid, and the like. The glycol component may include propylene glycol, 1,4-butanediol, neopentyl glycol, diethylene glycol, polyethylene glycol, polypropylene glycol, polytetramethylene glycol, cyclohexanedimethanol, 2,2-*bis*(4-hydroxyphenyl)propane, 2,2-*bis*(4-hydroxyethoxyphenyl)propane, p-hydroxybenzoic acid, and the like. These acid and glycol components may be each mixed within the range of less than 50% for each content in the copolymer content as a whole.

Examples of such thermoplastics resin products are containers for cosmetics and toiletries, containers for liquid seasonings, containers for drinks such as beer or cola, containers for medicine, containers for liquid detergents, and the like.

The polyethylene terephthalate used in the present invention may contain additives such as a colouring agent, an ultraviolet-absorbing agent and an anti-static agent in an appropriate proportion as the case may be.

The present invention is also directed to amethod for printing a plastics material product with a radiation-curable type printing ink, characterised in that the said printing ink has, as a base, a radiation-curable type ink composition comprising the vehicle mixture of the above-mentioned (A) to (F) components wherein the acid value of the vehicle mixture is from 5 to 100, together with 0 to 20 parts by weight of a photopolymerisation initiator, 0 to 20 parts by weight of a photosensitiser and 0 to 100 parts by weight of an organic and/or inorganic pigment per 100 parts by weight of the vehicle mixture.

The method for printing the plastics material product according to the present invention is to first carry out printing with the printing ink having the radiation-curable type composition as a base, which comprises the above-mentioned (A) to (F) components, and then harden the radiation-curable ingredients in the printing ink by applying radiation to the printed surface.

The polyethylene terephthalate product made in accordance with the present invention includes containers made of, as starting materials, saturated polyesters such as polyethylene terephthalate by moulding.

The containers to be used in the method for printing on the surface of a container according to the present invention include polyester containers obtained by processes such as hollow moulding, blow moulding with double axle extension or injection moulding and the like.

Further, the composition of radiation-curable type ink removable with alkali according to the present invention includes a fluorinated carboxylic ester containing double bonds and/or fluorinated block copolymer and/or silicon block copolymer, and, upon printing, the fluorine and/or silicon rich parts are oriented on the surface, thereby affording chemical resistance, water-repellency, soiling resistance and abrasion resistance and enhancing the stability during distribution of the printed products as well as during its actual use.

The present invention also relates to a method for eliminating or removing a radiation-curable type printing ink from printed thermoplastics material products, which comprises printing the thermoplastics material product with the printing ink which has, as a base, a radiation-curable type ink composition comprising the vehicle mixture of the above-mentioned (A) to (F) components wherein the acid value of the vehicle mixture is from 5 to 100, together with 0 to 20 parts by weight of a photopolymerisation initiator, 0 to 20 parts by weight of a photosensitiser and 0 to 100 parts by weight of an organic and/or inorganic pigment per 100 parts by weight of the vehicle mixture, followed by radiation on the printed surface thereof to harden the radiation-curable ingredients in the printing ink, and dissolving or removing the cured film in a membranous form with an aqueous alkaline solution.

While the conditions for detaching the ink composition by alkali vary depending on the weight ratio of (B), (C) and (D) components, it is preferable to have an alkaline concentration of 5% or more, a temperature at 70°C or more and a duration of S minutes or more. However, it may be practical to use an alkaline concentration of 1% and a temperature to 50°C by immersion for an extended time in an alkaline solution or immersion while brushing the printed surface, by controlling the weight ratio of (B), (C) and (D) components, or by reflecting additional conditions brought by the printing and curing processes and the like.

When the alkali removing treatment is applied on a commercial scale, it may be performed by the selective application of those conditions.

Moreover, the alkali-removable radiation-curable ink composition includes the mixture of an alkali metal and a double bond-containing polycarboxylic or carboxylic ester, having an acid group which facilitates the formation of water soluble salts or salts capable of water-swelling, and the cured ink film is removed in filmy form without difficulty from the used printed product by means of treatment with an aqueous alkaline solution, thereby allowing re-cycled plastics resins and products to be recovered in a clean condition.

The filmy detachment of cured ink film is caused by the permeation of an aqueous alkaline solution through the interface between the body construction material and the ink film while preventing infiltration of an aqueous alkaline solution from the surface due to the water-repellency created by the surface orientation of the double bond-containing fluorinated carboxylic ester and/or fluorinated block copolymer and/or silicon block copolymer. As such, the ink film so removed can be collected in a simple process such as filtration. There is no problem with water pollution since none of it is discharged in waste water.

Furthermore, the scope of its application is further enlarged in view of the possibility that the amount of double bond containing fluorinated carboxylic ester and/or fluorinated block copolymer and/or silicon block copolymer is reduced, and/or the amount of double bond-containing carboxylic ester which is water soluble or facilitates generation of water swelling alkali metal salt is increased/reduced to dissolve the ink as a whole in an aqueous alkaline solution and to remove the ink from the surface of the plastics material.

The component (A) for the present vehicle mixture in the radiation-curable ink composition according to the present invention is at least one ingredient selected from the group consisting of a linear polyester oligomer substantially free from an acid group and a polymerisable double bond on the linear polyester chain, wherein 1 to 10 double bonds are pendent from the linear polyester chain; a linear polyester polymer substantially free of an acid group and a polymerisable double bond on the linear polyester chain, wherein 1 to 10 double bonds are pendent from the linear polyester chain; and mixtures thereof.

The linear polyester oligomer and/or polymer having 1 to 10 pendent double bonds in a molecule and having no polymerisable double bond in the main chain represent(s) an oligomer and/or polymer having 1 to 10 radiation-polymerisable double bonds in a molecule. The said oligomer and/or polymer are (is) not only indicating the characteristics of being polymerised with radiation by itself but also capable of polymerising in combination with other radiation-polymerisable double bond containing compounds.

The pendent double bonds in the said oligomer and/or polymer include those in a vinyl group, allyl group, methacryloyl group, acryloyl group, crotonyl group etc.. But a methacryloyl or acryloyl group is preferable because of its increased polymerisability when radiation is applied.

The double bond-containing groups in the said oligomer and/or polymer include those in vinyl groups, allyl groups, methacryloyl groups, acryloyl groups, crotonyl groups and the like. But methacryloyl or acryloyl groups are preferable because of their increased polymerisability when radiation is applied.

For the polyester oligomer and/or polymer having a methacryloyl or acyloyl group, polyurethane-methacrylate is used in particular as it has an adhesive nature in contact with the base or a flexible chemical structure capable of following the expansion/contraction of the base. It is more preferable to use polyurethane methacrylate or acrylate made from high molecular polyol wherein the polyester polyol is extended with diisocyanates.

The copolymerized polyester polyols are synthesised mainly with dicarboxylic acid components and glycol components. The polyester has no polymerisable double bond in its skeleton and is called a "saturated polyester".

The dicarboxylic acid component may include as a main constituent an aromatic dicarboxylic acid such as terephthalic acid, isophthalic acid and orthophthalic acid and the like and is used in more than 60 mol% in total diacid compounds, and, for the purpose of affording flexibility, an aliphatic dicarboxylic acid such as succinic acid, adipic acid, sebacic acid, dodecane dicarboxylic acid etc. and an alicyclic dicarboxylic acid such as hexahydrophthalic acid and tetrahydrophthalic acid is also used in less than 40 mol% in total diacid compounds.

The glycol component may include ethylene glycol, propylene glycol, 1,3-propanediol, 1,4-butanediol, 1,6-hexanediol, neopentyl glycol, diethylene glycol, dipropylene glycol, 1,4-cyclohexanedimethanol, spiro glycol, 1,4-phenylene glycol, an ethylene oxide or polyethylene oxide derivative of bisphenol A, polyethylene glycol, polypropylene glycol, and the like. Depending on necessity, a small amount of triols or tetraols such as trimethylol propane, glycerine, pentaerythritol and the like may be admixed.

In order to synthesise copolymerised polyester polyols from such dicarboxylic acid components and glycol components, an excess amount of the glycol component is used per dicarboxylic acid starting component. It is preferable to synthesise so that the terminal carboxylic group may be maintained at less than 50 eq/10⁶ g in the resultant copolymerised polyester. In cases where it exceeds 50 eq/10⁶ g, the target polyurethane methacrylate or acrylate product will not be obtained due to excessive increase of the inactive ends during reaction with diisocyanate compounds at the time of extending polyester polyols to urethane polymers.

In order to obtain the urethane acrylate from the copolymerised polyester polyol so synthesised, the said copolymerised polyester, a polyisocyanate compound and a compound having a methacryloyl or acryloyl group as well as an active hydrogen group may be reacted.

The polyisocyanate compound may include 2,4-trilene diisocyanate, diphenylmethane diisocyanate, 1,3-diisocyanate methylcyclohexane, 1,4-diisocyanate methylcyclohexane, 4,4'-diisocyanate dicyclohexane, 4,4'-diisocyanate dicyclohexylmethane, isophorone diisocyanate and a variety of other commercially available diisocyanates. In addition, when polyfunctional acrylates are required, polyisocyanate in a class more than tri-isocyanate may be applied alone or in combination with the said diisocyanate.

The chemical compound having a methacryloyl or acryloyl group and an active hydrogen group refers to a compound having at least one double bond and at least one hydroxyl group in one molecule. The double bond which can be used in the present invention may be vinylic, allylic, methacrylic, acrylic, crotonic, etc. The methacryloyl or acryloyl groups are preferred in view of their high sensitivity against radiation.

The chemical compounds having a methacryloyl or acryloyl group and an active hydrogen group may include dihydric alcohol monomethacrylates or monoacrylates such as ethylene glycol monomethacrylate or monoacrylate, propylene glycol monomethacrylate or monoacrylate, butanediol monomethacrylate or monoacrylate, diethylene glycol monomethacrylate or monoacrylate, dipropylene glycol monomethacrylate or monoacrylate and the like; trihydric alcohol mono- or dimethacrylates or mono- or diacrylates such as trimethylol ethane monomethacrylate or monoacrylate, trimethylol ethane dimethacrylate or diacrylate, trimethylol propane monomethacrylate or monoacrylate, trimethylol propane dimethacrylate or diacrylate, glycerine monomethacrylate or monoacrylate glycerine dimethacrylate or diacrylate and the like; polyhydric alcohol methacrylates or acrylates having a hydroxy group, including the methacrylate or acrylate of an alcohol containing 4 or more hydroxy groups, such as pentaerythritol monomethacrylate or monoacrylate, pentaerythritol dimethacrylate or diacrylate, pentaerythritol trimethacrylate or triacrylate and dipentaerythritol tetramethacrylate or tetraacrylate; an chemical compound having a hydroxy group, derived from acrylation or methacrylation of caprolactone derivatives of any of the aforementioned alcohols; epoxymethacrylates or epoxyacrylates prepared by a ring-opening addition of methacrylic or acrylic acids with epoxy compounds, including monoglycidyl ethers; dihydric alcohol diglycidyl ethers such as ethylene glycol diglycidyl ether, polyethylene glycol diglycidyl ether, propylene glycol diglycidyl ether and neopentyl glycol diglycidyl ether; polyhydric alcohol glycidyl ethers such as trimethylol propane triglycidyl ether and the like; the glycidyl ether of a chemical compound having a phenolic hydroxy group, such as bisphenol A glycidyl ether and the like.

These compounds may be used singularly or in combination of 2 or more kinds. The double bond-pendent polyester oligomer and/or polymer which is obtained by reaction of the aforementioned starting compounds may be acceptable if it contains at least one double bond, and those having 1 to 10 double bonds are utilised for such application. For the purpose of avoiding any tack on the cured film surface and maintaining adhesiveness and flexibility in contact with the base, it is preferable to keep at least 3 to 7 double bonds in a single molecule.

The component (B) for the present vehicle mixture in the radiation-curable ink composition according to the present invention is at least one ingredient selected from the group consisting of a one double bond-containing carboxylic acid wherein the carboxylic acid has at least one acid group, a carboxylic ester of the said acid, a carboxylic amide of the said acid, and mixtures thereof.

The group consisting of a one double bond-containing carboxylic acid wherein the carboxylic acid has at least one acid group, a carboxylic ester of the said carboxylic acid and a carboxylic amide of the said carboxylic acid, is regarded, in general, as an "acid monomer". A homopolymer of the acid monomer and a copolymer with higher contents of the acid monomer form water soluble alkali metal salts.

The double bond in the "acid monomer" may be vinylic, allylic, methacrylic, acrylic, crotonic, etc. The methacryloyl or acryloyl groups are preferable in this instance in view of their high radiation-curing ability. The acid group includes a carboxyl group, sulphonyl group, phosphoryl group and the like but introduction of carboxyl groups into the molecule usually serves the purpose. Each molecule requires at least 1 to 2 carboxyl groups.

While the simplest carboxyl group-containing acid monomer is methacrylic or acrylic acid, it is not desirable to be used as the starting materials for ink products owing to its strong odour and from the safety point of view. Therefore, the acid monomer is synthesised by reacting the compound having a double bond and a hydroxyl group in the same molecule, with a cyclic acid anhydride corresponding to its hydroxyl equivalent. The acid monomers are an alkylene oxide derivative of acid anhydride-carboxylated methacrylic or acrylic acids, a caprolactone derivative of acid anhydride-carboxylated methacrylic or acrylic acids, a monoglycidyl ether derivative of acid anhydride-carboxylated methacrylic or acrylic acids, an acid anhydride-carboxylated methylol methacrylic or acrylic amide, etc. The acid anhydride includes succinic anhydride, maleic anhydride, dodecylsuccinic anhydride, phthalic anhydride, tetrahydrophthalic anhydride, etc. Maleic anhydride is useful because of its lower polymerisability per se and even after ring-opening esterification and because of its lower polymerisation with methacrylates or acrylates.

The aforementioned acid monomer can be synthesized from a compound having one double bond and at least one hydroxyl group in one molecule by addition of a cyclic acid anhydride in an equimolar amount in view of the hydroxy group of the compound followed by heating for a determined period to introduce the carboxyl group. The anhydride to be used for the introduction of the carboxyl group includes saturated aliphatic dicarboxylic anhydrides such as succinic anhydride and the like, unsaturated aliphatic dicarboxylic anhydrides such as maleic anhydride, itaconic anhydride and the like, alicyclic dicarboxylic anhydrides such as tetrahydrophthalic anhydride, hexahydrophthalic anhydride and the like, aromatic dicarboxylic anhydrides such as phthalic anhydride, naphthenic anhydride and the like, tricarboxylic anhydrides such as trimellitic anhydride and the like.

Furthermore, acrylic acid dimers and acrylic acid trimers produced as by-products in the synthesis of an acrylic acid monomer can be used as acid monomers as they are.

The acid monomers wherein an acid group (other than a carboxyl group) is capable of forming a water-soluble homopolymer with an alkali metal salt are phosphoric acid mono- or di- esters such as mono methacryloxyethylphosphate or monoacryloxyethylphosphate, methacryloxyethylphosphorylphenyl or acryloxyethylphosphorylphenyl, dimethacryloxyethylphosphate or diacryloxyethylphosphate and the like, sulphonic esters such as methacryloxyethylsulphonate or acryloxyethylsulphonate, dimethacryloxyethylsuccinylsulphonate or diacryloxyethylsuccinylsulphonate and the like.

The above-mentioned acid monomer may be used singularly or in a mixture of 2 or more, depending on desired final physical properties of the cured film and its amounts to be used may also be determined with the similar considerations.

The component (C) for the present vehicle mixture in the radiation-curable ink composition according to the present invention is a double bond-containing polycarboxylic ester, wherein 2 to 10 acid groups are present and at least 2 double bonds are pendent from the carboxylic ester having 2 to 10 acid groups.

The double bond-containing polycarboxylic ester having 2 to 10 acid groups and having at least 2 pendent double bonds in a molecule is regarded, in general, as an "acid oligomer". A homopolymer of the said acid oligomer and/or a copolymer with higher contents of the said acid oligomer have (has) a high cross-linking density and a capability of forming a water-swelling alkali metal salt. Its alkali metal salt also has the characteristics of swelling with water absorption.

As well as in the case of the above-mentioned acid monomer, a preferred double bond-containing group in this acid oligomer is a methacryloyl or acryloyl group in view of its higher radiation-curing ability. Also, the same concept is applicable to the oligomer's acid group which is capable of forming an alkali metal salt. Examples of such acid groups are carboxyl groups, sulphonyl groups and phosphoryl groups and the like but carboxyl groups are rather popular. While the number of the acid group actually used in the application for the present invention ranges from 1 to 10, the number has to be determined by the molecular weight of the acid oligomer but it is practical, in view of availability, to adopt 2 to 6 for the acid oligomer to be economically synthesised. The acid oligomer is so-called polyfunctional wherein the number of double bonds (number of functional groups) in a molecule is more than 2. The above-mentioned acid oligomer having 2 to 6 functional groups is used in many cases.

The acid oligomer is synthesised through a reaction of an epoxy-acrylate or methacrylate obtainable by ring-opening esterification of a poly-epoxy compound and an acrylic acid or methacrylic acid as starting materials, with a cyclic acid anhydride to introduce a carboxyl group.

The epoxy-methacrylates or epoxy-acrylates include aliphatic epoxy-methacrylates or epoxy-acrylates such as methacrylic or acrylic acid derivatives of neopentyl glycol diglycidyl ether, methacrylic or acrylic acid derivatives of 1,6-hexanediol diglycidyl ether, methacrylic or acrylic acid derivatives of trimethylol propane triglycidyl ether, and the like; aromatic epoxy-acrylates such as methacrylic or acrylic acid derivatives of bisphenol A glycidyl ether, methacrylic or acrylic acid derivatives of epoxyphenolnovolak, methacrylic or acrylic acid derivatives of phthalic acid glycidyl ether, and the like.

The cyclic acid anhydride to be used for the purpose of introducing a carboxyl group into the epoxy-acrylate, may include succinic anhydride, maleic anhydride, dodecynyl succinic anhydride, phthalic anhydride, trimellitic anhydride, tetrahydrophthalic anhydride, hexahydrophthalic anhydride and the like. The products thus created are pendented in a half-esterified form of hydroxyl groups in the epoxyacrylate by the act of the acid anhydride

The acid oligomer may be used singularly or in a mixture of more than 2 types. The amount of application of the acid oligomer is determined depending upon the performance required for the ultimate physical properties of cured film of this ink composition. Taking this point in terms of acid value, the mixing ratio and mixing amount must be determined so that the acid value of whole vehicle may be from 5 to 100, preferably in the range of 20 to 50.

The component (D) for the present vehicle mixture in the radiation-curable ink composition according to the present invention is at least one ingredient selected from the group consisting of (a) a double bond-containing fluorinated carboxylic ester, (b) a block copolymer comprising a fluorinated alkyl group-containing polymer segment and a methacrylic or acrylic polymer segment, (d) a block copolymer comprising a siloxane group-containing polymer segment and a methacrylic or acrylic polymer segment, and mixtures thereof.

The water-repellent double bond-containing fluorinated carboxylic esters wherein the fluorine component in the copolymer is oriented on the surface of the copolymer molecule include fluorinated alcoholic residue-containing esters such as trifluoroethyl methacrylate or acrylate, tetrafluoropropyl methacrylate or acrylate, octafluoropentyl methacrylate or acrylate, heptadecafluorodecyl methacrylate or acrylate and the like as well as fluorinated macro-monomers wherein the base chain has a fluorine group and the side chain is pendented with an acryloyl group, such as UNIRESIN™ series products manufactured by Shin-Nakamura Kagaku Kogyo Co., Japan.

These double bond-containing fluorinated carboxylic esters form a film wherein the fluorine components in these double bond-containing fluorinated carboxylic esters are oriented on the surface thereof, to give the film water-repellency, chemical resistance and soiling resistance. Furthermore, the film has the effect of facilitating penetration of an aqueous alkaline solution along the interface between the cured ink film and the base since polar groups are pushed toward the base.

The double bond-containing fluorinated carboxylic acid ester is combined in the range of 1 to 20 parts by weight per 100 parts of vehicle, and preferably 3 to 10 parts or so.

In cases where the amount of the double bond-containing fluorinated carboxylic ester is insufficient, the chemical resistance, repellency and soiling resistance of the ink surface is adversely affected, thus making it difficult to maintain the value of the printed product at the distribution stage. In cases where it is excessive, the ink has a reduced recoating ability, which makes multi-colour printing difficult. Since such ink will be too water-repellent, it is detrimental to the infiltration of an aqueous alkaline solution for ink removal, thus lowering work efficiency.

In the case of the block copolymer made of a fluorinated alkyl group-containing polymer segment and a methacrylic or acrylic polymer segment (fluorine-containing block copolymer), the methacrylic or acrylic copolymer segment is dissolved, on the contrary, in the radiation-curable vehicle taking advantage of the high degree of surface orientation of the fluoro group contained in the molecule and eventually caught firmly within the hardened substance after curing. Therefore, the cured film will get durable water-repellency, chemical resistance, soiling resistance and abrasion resistance and, concurrently, the polar group in-the vehicle is condensed at the side of the base, thus improving the effect on infiltration of an aqueous alkaline solution along the interface between the hardened film and the base.

On the methacrylic or acrylic polymer segment contained in the fluorinated block copolymer, various functional groups such as an amino group, alkylamino group, epoxy group, hydroxyl group, carboxyl group etc. can be introduced by selection of methacrylic or acrylic monomers. The fluorinated block copolymer carrying those functional groups can be optionally selected and utilised depending upon the physical properties required for the film product. When the acid group capable of forming an alkali metal salt, like a carboyl group, is included, first application amount is limited in the range of acid values such as from 5 to 100, otherwise it may affect the acid value of the vehicle mixture.

These fluorinated block polymers are, for example, Modiper F™ series products manufactured by Nippon Yushi Co., Japan. The actual application amount of the fluorinated block polymer is 1 to 10 parts by weight per 100 parts by weight of the vehicle, but preferably about 3 to 7 parts. A predetermined amount of the fluorinated block polymer is dissolved beforehand in the component (F) which will ultimately constitute the vehicle composition, followed by addition to the vehicle.

The block copolymer consisting of a siloxane group-containing polymer segment and a methacrylic or acrylic polymer segment (siloxane-containing block copolymer) can be used since it indicates good surface orientation. This siloxane-containing block copolymer is capable of affording not only water-repellency but also detachment ability from the mould and abrasion resistance as it indicates better surface orientation similar to those of the fluorine-containing block copolymer. Although the water-repellency of the siloxane-containing block copolymer is not as strong as that of the fluorine-containing block copolymer, it has excellent abrasion resistance, and the cured ink film using it has a special feature that prevents any scratches during distribution processes of the printed products. Furthermore, it will be effective for the removal of the film with an aqueous alkaline solution as intended by the present invention.

In the case of the siloxane-containing block copolymer, various polar groups as well as mentioned above in the case of fluorinated block polymer can be introduced into a methacrylic or acrylic polymer segment by selecting a methacrylic or acrylic monomer. These may be optionally selected and used depending upon the physical film properties ultimately required.

The siloxane-containing block copolymers are, for example, Modiper-FS™ series products manufactured by Nippon Yushi Co., Japan. The application amount thereof is in the range of 0.05 to 10 parts by weight in 100 parts of the vehicle but preferably 1 to 5 parts by weight under normal circumstances. While it is somewhat inferior in water-repellency to the fluorine-containing block-copolymer, an increase in the amount is not necessary to make it up; instead, it is desirable to avoid possible reduction of recoating ability when using larger amounts. A predetermined amount of this siloxane-containing block copolymer is dissolved beforehand in the component (F) which will ultimately constitute the vehicle composition, followed by addition to the vehicle.

The fluorine-containing block copolymer and/or siloxane-containing block copolymer can be used in combination with the double bond-containing fluorinated carboxylic ester in a composition comprising either two or three of them. In such a case, a synergetic effect including the excellent water-repellency of the siloxane-containing compound and the excellent abrasion resistance of the siloxane-containing block copolymer can be obtained upon combining the two compounds but in the case of such a combination, the amount of the fluorine-containing compound shall be 2 to 4 times that of the siloxane-containing block copolymer so that the intended purpose may be satisfied to the best extent. In the case of such a combination, the overall application amount may be 1 to 10 parts by weight per 100 parts of vehicle, most preferably in the range of 3 to 7 parts by weight .

The component (E) for the present vehicle mixture in the radiation-curable ink composition according to the present invention is a double bond-containing carboxylic ester, having at least 2 double bonds and free of an acid group, provided that this carboxylic ester is excluded from the above-mentioned component (A).

The double bond-containing polycarboxylic esters having no acid group which are excluded from the component (A) are sold commercially as conventionally called a "polyfunctional monomer" or a "polyfunctional oligomer". Typical of those polyfunctional monomers are dihydric alcohol dimethacrylates or diacrylates such as ethylene glycol dimethacrylate or diacrylate, triethylene glycol dimethacrylate or diacrylate, tripropylene glycol dimethacrylate or diacrylate, 1,4-butanediol dimethacrylate or diacrylate, 1,6-hexanediol dimethacrylate or diacrylate, neopentyl glycol dimethacrylate or diacrylate, hydroxypivalic acid neopentyl glycol dimethacrylate or diacrylate, ethylene oxide-modified bisphenol A dimethacrylate or diacrylate, dicyclopentanyl dimethacrylate or diacrylate and the like, trihydric alcohol trimethacrylates or triacrylates such as trimethylol ethane trimethacrylate or triacrylate, trimethylol propane trimethacrylate or triacrylate, glycerine trimethacrylate or triacrylate, *tris*(methacryloxyethyl)isocyanurate or tris(acryloxyethyl)isocyanurate and the like; polyhydric alcohol methacrylates or acrylates such as pentaerythritol tetramethacrylate or tetraacrylate, ditrimethylol propane tetramethacrylate or tetraacrylate, dipentaerythritol hexamethacrylate or hexaacrylate and the like. It can be allowed to contain partially unesterified hydroxy groups upon esterification of the trihydric or polyhydric alcohols with methacrylic or acrylic acids. It can be also allowed to have hydroxy groups produced upon ring-opening esterification of epoxy groups with methacrylic or acrylic acids.

The polyfunctional oligomers are oligomers excluding the double bond-containing linear polyester oligomers and/or polymers defined as the component (A). Typical of those polyfunctional oligomers are epoxy methacrylate or acrylate, urethane methacrylate or acrylate, polyester methacrylate or acrylate, polyether methacrylate or acrylate, polybutadiene methacrylate or acrylate, and the like.

Among epoxy methacrylates or acrylates, most conventional examples are a bisphenol-type compound of the formula (1): 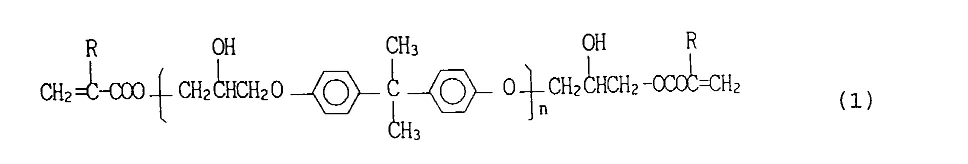 wherein n is 1 to 4 and R is H or CH₃, and those wherein the bisphenol skeleton is substituted with bisphenol A, bisphenol F, bisphenol S or the like in the aforementioned formula (1). A phenolnovolak-type epoxy methacrylate or acrylate having the formula (2): 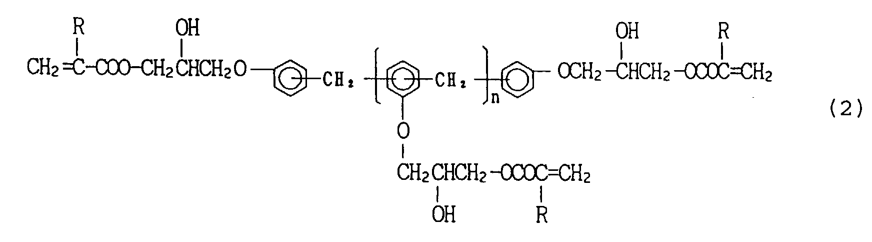 wherein n is 1 to 4 and R is H or CH₃, can be used.

The oligomers include aliphatic epoxy methacrylates or acrylates such as epichlorohydrin-modified (poly)alkylene glycol dimethacrylates or diacrylates and epoxylated soy bean oil methacrylates or acrylates, alicyclic epoxy methacrylates or acrylates such as a compound of the formula (3): 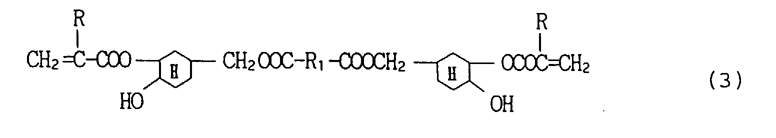 wherein R is H or CH₃ and R₁ is a residue derived from dicarboxylic compounds by exclusion of -COOH groups therefrom, depending on demand.

The urethane methacrylates or acrylates includes a compound having the formula (4): 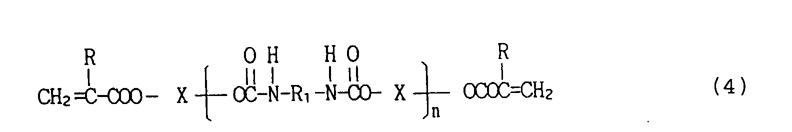 wherein n is 1 to 4, R is H or CH₃, R₂ is a residue derived from diisocyanates by exclusion of -NCO groups therefrom, and X is a residue derived from polyols by exclusion of OH groups therefrom, etc.

In the formula (4), the isocyanates include aromatic diisocyanates such as trilene diisocyanate, 4,4-diphenylmethane diisocyanate, xylylene diisocyanate and the like, aliphatic diisocyanates such as hexamethylene diisocyanate, trimethylhexamethylene diisocyanate and the like, alicyclic diisocyanates such as isophorone diisocyanate, methylene *bis*(4-cyclohexylisocyanate) and the like and the polyols includes glycols such as ethylene glycol, propylene glycol, 1,4-butanediol, 1,6-hexanediol polyglycol ethers, bisphenol ethers such as ethoxylated bisphenol A and the like, spiro glycol, caprolactone-modified diols. carbonated diols and the like.

The urethane methacrylate or acrylate can be selected from those sold commercially and synthesised by methacrylating or acrylating the terminus of a urethane prepared by combination of the diisocyanate with the polyol.

The polyester methacrylate or acrylate is a compound of the formula (5): 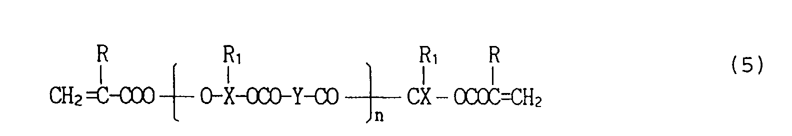 wherein n is 1 to 5, R is H or CH₃, R₁ is H or CH₂=C(R)COO-, X is a residue derived from polyols by exclusion of OH therefrom, Y is a residue derived from dicarboxylic compounds by exclusion of -COOH groups therefrom, and the like. A number of such compounds are commercially available and can be selected from those known in the art, depending on requirements.

The polybutadiene methacrylates or acrylates include those synthesised by methacrylating or acrylating a liquid polybutadiene having at least two terminal hydroxyl groups, and those wherein the hydroxyl group is coupled with a methacrylic or acrylic ester having a hydroxyl group by using a diisocyanate. Typical of those are commercially available chemicals such as Quinbeam-101™ (Nippon Zeon, Japan), TE™ resins (Nippon Soda, Japan), and MIKERON NU-A™ (Hayakawa Rubber, Japan).

The purpose of using the polyfunctional monomer and/or oligomer is to create three-dimensional cross-linking when polymerisation is conducted with radiation and to afford film hardness, gloss, watertightness, chemical resistance and abrasion resistance.

The above-mentioned polyfunctional monomer and/or oligomer may be used independently but in many cases a mixture including two or more types is added as the vehicle component. The application amount is determined in consideration of whether the cross-linking density during the curing process is satisfactory in addition to the other considerations of physical properties thereof such as solubility and viscosity as well as the other vehicle components. Further in accordance with the intended purpose, adjustment of acid values of the vehicle will also be one restrictive condition on the determination of application amount in order to achieve the elimination with alkali (which is the very subject of the present invention). In many cases, 5 to 20 parts by weight of the polyfunctional monomer and/or oligomer per 100 parts of the vehicle is used, but in case of excessive application, removable stress may occur due to cross-linking contraction during a curing process and the ability of adhering to the base may be hampered.

The component (F) for the prevent vehicle mixture in the radiation-curable ink composition according to the present invention is at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof.

The double bond-containing carboxylic ester and/or amide and/or imide having a single radiation-curable double bond and free of an acid group in a single molecule is called a "monofunctional monomer" among monomers contained in the radiation-curable type resin compositions. The monofunctional monomer is used mainly as a diluent to adjust viscosity in the composition. A number of monofunctional monomers are known in the art. Typical of those monofunctional monomers are 2-ethylhexyl methacrylate or acrylate, cyclohexyl methacrylate or acrylate, dicyclopentanyl methacrylate or acrylate, benzyl methacrylate or acrylate, phenoxyethyl methacrylate or acrylate, tolyloxyethyl methacrylate or acrylate, ethoxyethyl methacrylate or acrylate, ethylcarbitol methacrylate or acrylate, isobornyl methacrylate or acrylate, methoxypropylene glycol methacrylate or acrylate, acryloylmorpholine, *N*-vinylpyrrolidone, *N*-vinylcaprolactam, *N,N*-diethylaminoethyl methacrylate or acrylate, *t*-butylaminoethyl methacrylate or acrylate, etc.

Furthermore, the adhesiveness of the monofunctional monomer is remarkably improved in cases where it includes a polar group such as a hydroxyl group, epoxy group, phosphoric ester group and the like in its molecule, which may be utilised to the extent not to reduce water-tightness in the present invention.

Such monofunctional monomers include 2-hydroxyethyl methacrylate or acrylate, 2-hydroxypropyl methacrylate or acrylate, 3-butoxy-2-hydroxypropyl methacrylate or acrylate, caprolactone-modified 2-hydroxyethyl methacrylate or acrylate, 3-phenoxy-2-hydroxypropyl methacrylate or acrylate, glycidyl methacrylate or acrylate, ethylene oxide-modified butoxylated phosphoric acid methacrylate or acrylate, etc.

These monofunctional monomers are applied alone or in admixture with two or more components. The amount of monomer can vary between 5 and 40 parts per 100 parts of the ink vehicle. The viscosity may be conventionally controlled between 10 and 30 parts of the monofunctional monomers.

The aforementioned ink vehicle components are mixed in the desirable ratio determined through experiments to produce ink vehicles. The composition ratio is determined by adjusting the acid value from about 5 to 100 in order to achieve the prime purpose of the present invention which is removal with an aqueous alkaline solution. In producing the ultraviolet-curable type ink by using the vehicle so obtained, a photopolymerisation initiator, a photosensitizer, an organic and/or inorganic pigment and other additives can be added, but in case of applying EB (electron beam) curing, the photopolymerisation initiator and the photosensitiser are not necessary.

A number of photopolymerisation initiators which can be used in ultraviolet-initiated polymerisation are known in the art. Typical of those available initiators include benzophenone, diethoxyacetophenone, 1-hydroxycyclohexyl phenyl ketone, 2-methyl-(4-methylthiophenyl)-2-morpholinopropan-1-one, benzoylalkyl ether, benzil, benzildimethylketal, camphorquinone, 2-ethylanthraquinone, methyl benzoylbenzoate, 4-phenylbenzophenone, 3,3'-dimethyl-4-methoxybenzophenone, thioxanethone, 2,4-diethylthioxanthone, methyl phenylglyoxylate, benzoylphosphine oxide, 1-trimethylbenzoyldiphenylphosphine oxide, etc. Typical of known photosensitiser are triethanolamine, methyldiethanolamine, triisopropanolamine, 4,4'-diethylaminobenzophenone, ethyl 4-dimethylaminobenzoate, *n*-butoxyethyl 4-dimethylaminobenzoate, isoamyl 4-dimethylaminobenzoate, etc.

The above-mentioned photopolymerisation initiator may be used alone but, in many cases, its photopolymerisability is improved in a combined use with the photosensitiser. The most suitable photopolymerisation initiator and photosensitiser can be selected depending upon the vehicle composition to be applied. The standard applicable to such selection is curing speed, colouration during curing processes, existence of combined use of pigment, strength of odour after curing and the like, which is modified upon studies reflecting respective purposes. The application amount can range from 1 to 20 parts by weight for the photopolymerisation initiator and photosensitiser respectively as against the ink vehicle as a whole but it is not preferable to use a large amount in view of the resultant effect that the molecular weight will not increase and the strength of the cured film will deteriorate and an undesirable strong odour will be generated though curing progress will get accelerated. The most preferable application range is 2 to 10 parts by weight with combined use of both of them. In such case, the amount ratio between the photopolymerisation initiator and photosensitiser to be required varies depending upon the type and composition of the vehicle available. Also, in the case of the ink which includes an additional colouring pigment described below, the said ratio has to be changed reflecting the unique ultraviolet absorption ability of the pigment.

The pigment is roughly classified into an organic pigment and an inorganic pigment according to the chemical composition. It can be also classified into a coloured pigment and a colourless pigment (extender) in view of the application. With reference to radiation-curing, the role of the end use classification is more important.

Among the coloured pigments, the inorganic pigments include white pigments such as white lead, zinc oxide, zinc sulphide, titanium dioxide and the like, blue pigments such as ultramarine blue, iron blue, cobalt blue and the like, green pigments such as chromium oxide, verdian, chrome green and the like, chrome yellow, titan yellow, iron oxide yellow, molybdate orange, cadmium pigments, yellow to red pigments such as red oxide, black pigments such as iron black, titan black, carbon black and the like, metal pigments such as aluminium powder and bronze powder, pearl pigments such as mica. However, there are many types of inorganic pigment which can not be used for health reasons. Thus, a harmless one is selected from the above-mentioned pigments. The organic pigments include monoazo-pigments, diazo-pigments, condensed azo-pigments, indanthrone pigments, indigo pigments, thioindigo pigments, quinacridone pigments, phthalocyanine pigments, dioxazine pigments, isoindolinone pigments, pyrrolopyrrole pigments and the like. It is desirable to select a pigment with fast colour having strong light resistance in compliance with the radiation curing method.

The application amount of the above pigments varies depending on the intended colour depth but in most cases it falls in the range of 0.5 to 50 wt% per total ink composition volume. While the amount is restricted by colouring strength, being the pigment specificity, it ranges from 15 to 60 wt% in the case of titanium dioxide (representative white pigment), and from 3 to 6 wt% in the case of carbon black (black pigment). In the case of an organic pigment, 3 to 10 wt% is desirable in order to attain distinct colour and 4 to 6 wt% is desirable when curing is conducted with ultraviolet radiation. Generally speaking, the vehicle mixture according to the present invention has better dispersing ability since it contains many polar groups like a carboxyl group. However, in order to achieve still better colouration, a large amount of pigment is combined with the vehicle containing a small amount of pigment dispersing agent, thus creating a condition physically susceptible to crushing pressure by utilising improvement in the viscosity owing to its oil absorption, followed by sufficiently kneading with the conventional medium dispersing equipment in the colouring material production industry, such as a ball mill or roll mill. When the ink is composed by mixing, the resultant dispersed pigment (toner) in a high concentration is adjusted with the additional vehicle to meet the predetermined pigment density.

For the radiation-curable type ink component employed in the present invention, which is detachable with alkali after curing, various colourless pigments (extenders) may be utilised for the purpose of maintaining the special features of a printing ink such as viscosity, fluidity and thixotropy, of maintaining and increasing ink thickness, and of affording a contraction buffer while curing, surface dull-finishing, and slipperiness, as well as of improving film strength. The popular extenders include inorganic types such as talc, kaolin, silica, precipitated barium sulphate, precipitated calcium carbonate, alumina white, white carbon and the like, and waxes such as polyethylene wax, polypropylene wax, polyfluorinated polyethylene wax and the like, and fine powders of artificial and/or natural polymers such as a polyamide resin, polyimide resin, melamine resin, or benzoguanamine resin, cellulose, collagen and the like. The amount of those pigments may be optionally determined in compliance with the respective purposes. A surfacer (levelling agent) and/or defoamer (anti-foaming agent) may be included in the radiation-curable type ink composition according to the present invention which is detachable with alkali in order to adjust the finishing condition of the cured film. These agents shall be selected from the various types of surfacers and defoamers available in the market through experiments as to whether they are well compatible to the vehicle composition and provide surface smoothness. Application types or amounts thereof never impose a restriction on the contents of the ink composition according to the present invention, and they may be determined from time to time, but normally as a total amount of the surfacer and/or defoamer, they are used at 0.5 to 5 wt% per overall volume of ink.

In addition, an ultraviolet absorbing agent, a wetting agent, an anti-oxidising agent and the like may be employed as the case may be.

The ink using the radiation-curable type ink composition according to the present invention which is detachable with alkali after curing is used mainly for a screen printing method but it may be applicable to other printing methods such as flexography and gravure printing when it is adjusted to have less viscosity with the help of an organic solvent or a mixture thereof.

The cured printings with the radiation-curable type ink having a removable nature by alkaline water on polyethylene terephthalate resins can be easily removed by dipping it in an aqueous strong alkaline solution such as sodium hydroxide or potassium hydroxide for a short time and no drastic treatment such as hydrolysis of polyethylene terephthalate is required. For removal, there are several steps ranging from dissolving detachment to filmy detachment, which make it possible to attain the intended performance by controlling the amount ratio of (B), (C) and (D) components. In any case, selection of detachment conditions is determined considering the method of waste treatment after removal. After detachment the polyethylene terephthalate resin can be recovered in a condition clean enough for re-use and re-used through rather a simple method such as washing with water and drying.

The method for printing letters, designs, figures and the like with the above-mentioned printing ink includes a silk-screen printing method. In this method, in general, a silk-screen with the range of 254 to 330 mesh is normally utilised. A roughened surface on the plastics material product may be preferably printed with the printing ink.

Further, the ultraviolet radiation on the printing surface with the printing ink containing the said radiation-curable resin vehicle is conducted normally using a high pressure mercury-vapour lamp or metal halide lamp and the like, wherein its wavelength is 200 to 450 nm or so. The integrated ultraviolet exposure is preferably in the range of 100 to 500 mj/cm². Also, in the case of electron radiation, the radiation amount is normally in the range of 10 to 100 KGy, preferably in the range of 30 to 60 KGy.

The following working examples, preparation examples, and reference examples are intended to illustrate the present invention in further detail.

### Preparation Example 1

A double bond-pendent linear polyester oligomer and/or polymer which can be used in the following Working Examples is prepared by urethane-acrylating the copolymerised polyester polyols of the following composition (1) with the following compositions (2):
(1) Copolymerised polyester polyol

| | A | B |
|---|---|---|
| (Dicarboxylic acid components) | | |
| Terephthalic acid | 30 | 50 |
| Isophthalic acid | 30 | 50 |
| Orthophthalic acid | 40 | - |
| (Glycol components) | | |
| Ethylene glycol | 55 | 50 |
| Neopentyl glycol | 45 | 50 |
| Molecular weight of copolymer | 1900 | 3000 |
| (Part by weight) | | |

(2) A double bond-containing oligomer and/or polymer

| (Copolymerised polyester polyol components) | A-1 | B-1 |
|---|---|---|
| A | 100 | |
| B | | 100 |
| (Polyisocyanate components) | | |
| Isophorone diisocyanate | 28 | 27 |
| (Hydroxyl group-containing methacrylic or acrylic esters) | | |
| Pentaerythritol triacrylate | | 40 |
| 2-Hydroxyethyl acrylate | 13 | |
| Molecular weight | 2500 | 3600 |
| (part by weight) | | |

### Preparation Example 2

A double bond and carboxyl group-containing carboxylic ester is prepared as follows:
(a) Bisphenol A glycidyl ether (190.0 g, 190.0 epoxy equivalents), acrylic acid (75.0 g, 1.05 mol), dimethylbenzylamine (2 g) and p-methoxyphenol (0.2 g) were placed in a flask equipped with a thermometer, stirrer and reflux condenser, dissolved homogeneously, then heated to 80°C and allowed to stand for 24 hours affording an epoxy acrylate with 10.3 acid value. Then, the product was reacted with phthalic anhydride (140.6 g, 0.95 mol) and the mixture allowed to stand at 80°C for 5 hours to produce a bisphenol A epoxy acrylate-phthalic ester (viscous pale yellow product, 130.7 acid value).
(b) Epoxy novolak resins (190.0 g, 190.0 epoxy equivalents), acrylic acid (75.0 g, 1.05 mol), tetramethylammonium chloride (20 g) and p-methoxyphenol (0.2 g) were placed in a container similar to (a) above, dissolved homogeneously, then heated to 80°C and allowed to stand for 24 hours affording an epoxy acrylate with 10.5 acid value. Then, the product was reacted with succinic anhydride (95 g, 0.95 mol) and the mixture allowed to stand at 80°C for 5 hours to produce an epoxy novolak acrylate-succinic ester (viscous pale yellow product, 145.2 acid value).
(c) Glycerine triglycidyl ether (150.0 g, 150.0 epoxy equivalents), acrylic acid (75.0 g, 1.05 mol), tetrabutylphosphonium bromide (2.0 g) and p-methoxyphenol (0.2 g) were placed in a container similar to (a) above, dissolved homogeneously, then heated to 80°C affording an epoxy acrylate with 9.5 acid value. Then, the product was reacted with hexahydrophthalic anhydride (145 g, 0.95 mol) and the mixture allowed to stand at 80°C for 5 hours to produce a glycerine epoxy acrylate-hexahydrophthalic ester (viscous pale yellow product, 141.3 acid value).

### Reference Example 1

The double bond-containing oligomer obtained in Preparation Example 1, B-1 (24.4 g), an aliphatic urethane hexaacrylate (7.8g) a fluorine-containing macro-monomer (25.7 g), monoacryloyloxyethyl phthalate (6.3 g), the bisphenol A epoxy acrylate-phthalic ester obtained in Preparation Example 2, (a) (3.2 g), trimethylol propane triacrylate (2.0 g), phenoxyethyl acrylate (14.2 g), and acryloylmorpholine (16.4 g) were mixed to give a vehicle mixture with 17.6 acid value.

One hundred parts of the vehicle were admixed with 15 parts of mistrone vapour talc, 10 parts of benzildimethyl ketal, 5 parts of dimethylaminobenzoic acid ethyl ester, 3 parts of polyethylene wax powders and 1 part of a surfacer, BYK-306™ (Byk-Mallinckrodt Chemische Produkte GmbH) and 0.1 part of a thermal polymerisation inhibitor, phenothiazine and the mixture was treated by a roll mill to produce a colourless ink with dispersion particle sizes of less than 5 microns.

### Working Example 1

An untreated polyethylene terephthalate sheet was screen printed with the ink obtained in Reference Example 1 by means of a 300 mesh Tetron™ screen and the printed product was radiated with a 120 W/cm metal halide lamp to the extent of integrated ultraviolet exposure of 200 mj/cm² to obtain a cured film. The film so prepared did not show any sign of exfoliation at a peel-off test with a cellulose adhesive tape but it showed close adhesion to the base.

When the cured film prepared under the same condition was kept in a 2% aqueous solution of sodium hydroxide at 70°C for 20 minutes, the cured film detached in filmy form and no trace of prints was observed on the polyethyiene terephthalate base.

### Reference Example 2

The double bond-containing oligomer obtained in Preparation Example 1, B-1 (177 g) was dissolved in 118 g of phenoxyethyl acrylate, and the resultant solution was mixed with a pigment disperser (1.5 g, SOLSPERSE™ 24000/SOLSPERSE™ 5000=4/1, manufactured by ICI, Great Britain), followed by addition of Heliogen Blue-L-7080™ (manufactured by BASF). The mixture was kneaded extensively with a roll mill to produce a toner with a dispersion particle size of less than 5 microns.

The toner thus obtained (41.6 g) was well mixed with dipentaerythritol hexaacrylate (8.4 g), trimethylol propane triacrylate (4.6 g), trimethylol propane triepoxy-acrylate (4.6 g), monoacryloyloxyethyl phthalate (8.7 g), the glycerine epoxy acrylatehexahydrophthalic ester obtained in Preparation Example 2, (c) (2.2 g), octafluorpentyl acrylate (8.8 g), and acryloylmorpholine (21.0 g) to give coloured ink vehicle (with 21.5 acid value).

One hundred parts of the coloured ink vehicle were admixed with a photopolymerisation initiator (3.0 g, diethylthioxanthone), a photosensitiser (3.0 g, isoamyl 4-dimethylaminobenzoate), precipitated barium sulphate (35 g), fluorinated polyethylene wax (3g) a surfacer (2 g VERSA-FLOW BASE™ manufactured by Shamrock Chemicals Corp.), a thermal polymerisation inhibitor (0.04 g, p-methoxyphenol) and well mixed by stirring followed by kneading by a roll mill to give a homogenous blue ink.

### Working Example 2

An untreated polyethylene terephthalate sheet was screen printed with the ink obtained in Reference Example 2 in the same manner as described in Working Example 1 and the printed product was radiated with a 120 W/cm metal halide lamp to the extent of integrated ultraviolet exposure of 300 mj/cm² to obtain a cured film. The film so prepared did not show any sign of exfoliation at a peel-off test with a cellulose adhesive tape but it showed close adhesion to the base.

When the cured film prepared under the same conditions was kept in a 2% aqueous solution of sodium hydroxide at 70°C for 20 minutes, the cured film detached in filmy form and no trace of prints was observed on the polyethylene terephthalate base.

### Reference Example 3

The double bond-containing oligomer obtained in Preparation Example 1, B-1 (14.2 g), an aliphatic urethane hexaacrylate (4.9 g), a fluorine-containing macro-monomer (5.9 g), monoacryloyloxyethyl succinate (4.5 g), the epoxy novolat acrylate-succinic ester obtained in Preparation Example 2, (b) (2.5 g), trimethylol propane triepoxy-acrylate (3.9 g), tolyloxyethyl acrylate (3.9 g), phenoxyethyl acrylate (9.4 g), and acryloylmorpholine (9.8 g) were mixed to give an ink vehicle mixture with 25.8 acid value.

A pigment dispersing agent, Disperbyk-110™ (0.5 g, manufactured by Byk-Mallinckrodt Chemische Produkte GmbH) was added to the ink vehicle mixture and the resultant mixture was mixed homogeneously by stirring. Then, titanium oxide (30.0 g, TIPAQUE CR-580™ Ishihara Sangyo Kaisha Ltd., Japan), a photopolymerisation initiator (6.0 g, acylphosphine oxide), a fluorinated polyolefin wax (2.0 g), a surfacer (1.5 g, VERSA-FLOW BASE™, manufactured by Shamrock Chemicals Corp.), a defoamer (1.0 g, AQUALEN N™, manufactured by Kyoeisha Chemicals Co, Japan), and a thermal polymerisation inhibitor (0.04 g, p-methoxyphenol) were added to the mixture followed by stirring for a while and the product was kneaded by a roll mill to give an ink with dispersion particle sizes of less than 5 microns.

### Working Example 3

An untreated polyethylene terephthalate sheet was screen printed with the ink obtained in Reference Example 3 in the same manner as described in Working Example 1 and the printed product was radiated with a 120 W/cm metal halide lamp to the extent of integrated ultraviolet exposure of 300 mj/cm² to obtain a cured film. The film so prepared did not show any sign of exfoliation at a peel-off test with a cellulose adhesive tape but it showed close adhesion to the base.

When the cured film prepared under the same condition was kept in a 2% aqueous solution of sodium hydroxide at 70°C for 30 minutes, the cured film detached in filmy form and floated in the solution. No trace of prints was observed on the polyethylene terephthalate base. The aqueous sodium hydroxide solution phase was colourless and transparent.

### Working Example 4

A detachment test was conducted by dipping the ink obtained in the same manner as described in Reference Example 1, in an alkaline solution. At the same time, a comparison was also carried out with the detachment characteristics of the prior art ink currently available in commercial use upon dipping it in an alkaline solution.

The following test samples were used:
- Vessel:: 2.7 litre untreated polyethylene terephthalate vessel, Weight 110 g, Printing area 150 cm², Surface area 900 cm²
- Ink:: (1) Prior art ink (A)
(2) Ink (B) obtained in the same manner as described in Reference Example 1

Screen printing was conducted with the respective above-mentioned ink on the surface of a vessel body made of untreated polyethylene terephthalate, using a 350 mesh nylon screen, and then radiation in the integrated amount of ultraviolet exposure, 150 mj/cm², was applied by means of a 120 W/cm metal halide lamp to form cured films. The said respective film did not show any sign of exfoliation at the peel-off test with a cellulose adhesive tape but it indicates good adhesiveness. Elimination test was conducted on the respective cured film prepared under the same condition by dipping it in an alkaline solution according to the following procedures:

| Conditions | | | |
|---|---|---|---|
| Dipping solution | Aqueous sodium hydroxide solution | | |
| | 0.1% | 1% | 5% |
| Dipping temperature | 20°C | 50°C | 80°C |
| Dipping term | 1 min | 5 min | 20 min 50min. |

Items to be confirmed are detachment properties in the case of natural separation and rubbing elimination with a gauze.

The evaluation on the detachment properties in the test includes the results of natural detachment and rubbing elimination with a gauze, of the printed parts, as follows:

Evaluation
- ⓞ: Complete natural detachment in a solution and no residual printed part thereon.
- ○: No residual printed part thereon after natural detachment and rubbing elimination with a gauze
- Δ: More than a half of printed parts thereon remains after natural detachment and rubbing elimination with a gauze
- Δx: Natural detachment takes place in part but merely less than a half of printed parts is removed even after rubbing elimination with a gauze
- x: No natural detachment takes place and only less than a half of printed parts is removed even with rubbing with a gauze
- xx: Upon rubbing with a gauze, discolouration occurs but no detachment of printed parts
- xxx: Upon rubbing with a gauze, neither discolouration nor detachment of printed parts takes place

**Table 1**

| Dipping soln. | | | | | | | |
|---|---|---|---|---|---|---|---|
| Temp. | Term | | | | | | |
| | | A | B | A | B | A | AS-61 |
| 20°C | 1 min. | × × × | × × | × × × | × × | × × | × × |
| | 5 min. | × × × | × × | × × | × × | × × | × × |
| | 20 min. | × × × | × × | × × | × × | × × | × × |
| | 50 min. | × × × | × × | × × | Δ × | × × | Δ |
| 50°C | 1 min. | × × × | × × | × × × | × × | × × | × × |
| | 5 min. | × × × | × × | × × | × × | × × | × × |
| | 20 min. | × × × | × × | × × | Δ× | × × | ○ |
| | 50 min. | × × × | × × | × × | Δ | × × | ⓞ |
| 80°C | 1 min. | × × × | × × | × × | × × | × × | × |
| | 5 min. | × × × | Δ × | × × | ○ | × × | ⓞ |
| | 20 min. | Δ | Δ | Δ | ⓞ | Δ | ⓞ |
| | 50 min. | Δ | Δ | Δ | ⓞ | Δ | ⓞ |

In the case of ink (B), complete natural detachment was observed in 5 to 20 minutes after dipping prints in a 1% aqueous solution of sodium hydroxide at 80°C.

Furthermore, it is possible to remove the printed part in a higher pH solution by extending dipping time even in somewhat lower temperature.

### Working Example 5

The printed vessel was prepared in the similar manner as described in Working Example 4, using the same test sample as in the case of Working Example 4, and crushed to about 1 cm cubes to produce flaky test materials (200 kg).

As the next step, the detachment properties were determined in a refining process practically applied to the collected polyethylene terephthalate flakes.

The refining process includes the following principle steps:
(1) Wind separation: Removal of paper and fine powders with a cyclone
(2) Float-and-sink separation: Gravity Separation in a water tank
(3) Cleaning with alkali: Dipping in a tank containing an aqueous solution of sodium hydroxide (pH 11.5 ∼ 12, 6,000 1) at 80°C for 10 and 20 minutes
(4) Washing: Washing in a water tank for 20 minutes
(5) Wind separation after drying
(6) Finished product

The results are summarised in Table 2.

**Table 2**

| | Ink (A) 100 % 80 kg | Ink (B) 100 % 80 kg | Ink (A) + Clear PET 7 % + 93 % 14 kg + 186 kg |
|---|---|---|---|
| 10 min. | - | ⓞ | ⓞ |
| 20 min | x | ⓞ | - |
| ⓞ No observation of ink stained flakes | | | |
| x Co-existence of a number of ink stained flakes | | | |

### Reference Example 4

The double bond-containing oligomer obtained in Preparation Example 1, B-1 (19.6g), phenoxyethyl acrylate (19.7g), tolyloxyethyl acrylate (6.6g), acryloylmorpholine (16.1g), trimethylol propane triepoxyacrylate (6.6g), 6 functional group-containing urethane EBECRYL™ (8.2 g, manufactured by DAICEL.UCB Co., Ltd), monoacryloyloxyethyl phthalate (7.2g), the bisphenol A epoxy acrylatephthalic ester obtained in Preparation Example 2, (a) (2.0g), and the block copolymer solution (14.0g) which is prepared by mixing and dissolving acryloylmorpholine (71.0 wt%), a fluorine-containing block copolymer, Modiper F600™ (20.5 wt%, Nippon Yushi Co., Japan) and a siloxane-containing block copolymer, Modiper FS700™ (8.5 wt%, Nippon Yushi Co., Japan), were mixed by stirring to give a homogeneous vehicle with 17.9 acid value.

Then, a pigment disperser, Anti-Terra-U™ (0.2 g, manufactured by Byk-Mallinckrodt Chemische Produkte GmbH) and p-methoxyphenol (0.05 g) were dissolved in the vehicle (92.0 g) in advance, followed by dispersing Raven 450™ (1.5 g, manufactured by Columbian Chemicals Co.), Raven 1350™ (1.5 g, manufactured by Columbian Chemicals Co.) and Titan Black 10S™ (5.0 g, manufactured by Mitsubishi Material Co., Japan) and kneading by a roll mill extensively to afford a colouring vehicle with dispersion particle sizes of less than 5 microns.

The colouring vehicle (96.5 g) was added to a fluorinated polyolefin wax (2.0 g), a surfacer (0.5 g, BYK-306™ manufactured by Byk-Mallinckrodt Chemische Produkte GmbH) and a defoamer (1.0 g), Aqualene™, manufactured by Kyoeisha Yushi K.K., Japan), and the resultant mixture was stirred extensively by a dissolver to produce a black ink for EB curing.

### Working Example 6

An untreated polyethylene terephthalate sheet was screen printed with the black ink thus obtained by means of a 330 mesh screen and the printed ink was cured in 6 Mrad (165 KV, 3.2 mA, 10 m/min.) with an EB radiation device, CB250/15/180L™ (manufactured by Iwasaki Denki K.K., Japan) to form a tack-free cured coating film. The film so prepared did not show any sign of exfoliation in a peel-off test with a cellulose adhesive tape but it showed close adhesion to the base.

When the cured film was dipped in a 5% aqueous solution of sodium hydroxide at 80°C for 5 minutes, the cured film detached completely in filmy form from the base. Neither trace of prints nor any sign of erosion by an aqueous alkaline solution was observed on the polyethylene terephthalate base.

## Claims

1. A printed thermoplastics resin product which is (I) painted with a radiation-curable type printing ink which comprises a vehicle mixture containing:
(A) at least one ingredient selected from the group consisting of a linear polyester oligomer substantially free of an acid group and free of a polymerisable double bond on the linear polyester chain, wherein 1 to 10 double bonds are pendent from the linear polyester chain; a linear polyester polymer substantially free of an acid group and free of a polymerisable double bond on the linear polyester chain, wherein 1 to 10 double bonds are pendent from the linear polyester chain; and mixtures thereof,
(B) at least one ingredient selected from the group consisting of a one double bond-containing carboxylic acid wherein the acid has at least one acid group, a carboxylic ester of the said acid, a carboxylic amide of the said acid, and mixtures thereof,
(C) a double bond-containing polycarboxylic ester wherein 2 to 10 acid groups are present and at least 2 double bonds are pendent from the carboxylic ester having 2 to 10 acid groups,
(D) at least one ingredient selected from the group consisting of a double bond-containing fluorinated carboxylic ester, a block copolymer comprising a fluorinated alkyl group-containing polymer segment and a methacrylic or acrylic polymer segment, a block copolymer comprising a siloxane group-containing polymer segment and a methacrylic or acrylic polymer segment, and mixtures thereof,
(E) a double bond-containing carboxylic ester, having at least 2 double bonds and free of an acid group, provided that it is excluded from the above-mentioned component (A) and,
(F) at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof,
wherein the acid value of the vehicle mixture is from 5 to 100, and (II) treated with radiation on the printed surface thereof to cure the printing ink.

2. A printed thermoplastics resin product according to claim 1, **characterised in that** the radiation-curable type printing ink composition further comprises:
(i) 0 to 20 parts by weight of a photopolymerisation initiator,
(ii) 0 to 20 parts by weight of a photosensitiser and
(iii) 0 to 50 wt% of an organic and/or inorganic pigment per total ink composition.

3. A thermoplastics resin product according to claim 1, **characterised in that** the thermoplastics resin product is a polyethylene terephthalate product with a roughed surface for printing.

4. A thermoplastics resin product according to claim 1, **characterised in that** the thermoplastics resin product is a container for cosmetics and toiletries, for liquid seasonings, for drinks, for medicine or for liquid detergents.

5. A thermoplastics resin product according to claim 1, **characterised in that** the double bond-containing fluorinated carboxylic ester of the component (D) is a fluorinated alcoholic residue-containing ester or a fluorinated macro-monomer wherein the main chain has a fluorinated group and the side chain is a pendent acryloyl or methacryloyl group.

6. A thermoplastics resin product according to claim 1, **characterised in that** the fluorinated carboxylic ester of the component (D) is at least one methacrylate or acrylate ester selected from the group consisting of trifluoroethyl methacrylate or acrylate, tetrafluoropropyl methacrylate or acrylate, octafluoropentyl methacrylate or acrylate, and heptadecafluorodecyl methacrylate or acrylate.

7. A thermoplastics resin product according to claim 6, **characterised in that** the carboxylic ester of the component (D) is present in the range of 1 to 20 parts by weight per 100 parts of the vehicle mixture.

8. A thermoplastics resin product according to claim 1, **characterised in that** the block copolymer of the component (D) is present in the range of 1 to 10 parts by weight per 100 parts of the vehicle mixture.

9. A thermoplastics resin product according to claim 1, **characterised in that** the block copolymer of the component (D) is present in the range of 0.5 to 10 parts by weight per 100 parts of the vehicle mixture.

10. A thermoplastics resin product according to claim 1, **characterised in that** the component (D) is a mixture of two or three members selected from the group consisting of
(1) a double bond-containing fluorinated carboxylic ester,
(2) a block copolymer which comprises a fluorinated alkyl group-containing polymer segment and a methacrylic or acrylic polymer segment, and
(3) a block copolymer which comprises a siloxane group-containing polymer segment and a methacrylic or acrylic polymer segment.

11. A thermoplastics resin product according to claim 10, **characterised in that** the total amount of the mixture of the component (D) is in the range of 1 to 10 parts by weight per 100 parts of the vehicle mixture.

12. A thermoplastics resin product according to claim 1, **characterised in that** the component (A) is selected from oligomers or polymers which contain at least one vinyl, allyl, methacryloyl, acryloyl, or crotonyl group.

13. A thermoplastics resin product according to claim 1, **characterised in that** the component (A) is at least one oligomer or polymer classified in urethane methacrylates or acrylates derived from a linear polyester polyol compound free of a polymerisable double bond on the linear polyol chain, a polyisocyanate compound and a compound having a methacryloyl or acryloyl group and an active hydrogen group as starting compounds.

14. A thermoplastics resin product according to claim 13, **characterised in that** the linear polyester polyol compound is synthesised from a dicarboxylic acid component and a glycol component wherein the dicarboxylic acid component is at least one compound selected from the group consisting of an aromatic dicarboxylic acid, an aliphatic dicarboxylic acid, an alicyclic dicarboxylic acid and a heterocyclic dicarboxylic acid and the glycol component is selected from the group consisting of an alkylene glycol a dialkylene glycol, cyclohexanedimethanol, spiro glycol, 1,4-phenylene glycol, bisphenol A ethylene oxide or polyethylene oxide, and polyethylene glycol.

15. A thermoplastics resin product according to claim 13, **characterised in that** the polyisocyanate compound is at least one compound selected from the group consisting of 2,4-trilene diisocyanate, diphenylmethane diisocyanate, 1,3-diisocyanate methylcyclohexane, 1,4-diisocyanate methylcyclohexane, 4,4'-diisocyanate dicyclohexane, 4,4'-diisocyanate dicyclohexylmethane, and isophorone diisocyanate.

16. A thermoplastics resin product according to claim 13, **characterised in that** the compound having a methacryloyl or acryloyl group and an active hydrogen group is at least one compound selected from the group consisting of a dihydric alcohol monomethacrylate or monoacrylate, trihydric alcohol mono- or dimethacrylate or mono- or diacrylate, polyhydric alcohol methacrylate or acrylate having at least one hydroxy group, an at least one hydroxy group-containing methacrylate or acrylate of an alcohol containing 4 or more hydroxy groups, a hydroxy group-containing compound derived from methacrylation or acrylation of a caprolactone derivative of any of the aforementioned alcohol compounds, and epoxy methacrylates or acrylates derived from a ring-opening addition of a methacrylic or acrylic acid with a glycidyl ether derivative of dihydric or polyhydric alcohols or phenolic hydroxy group-containing compounds.

17. A thermoplastics resin product according to claim 1, **characterised in that** the component (B) is at least one monomer selected from the group consisting of monomers which contains one vinyl group, allyl group, methacryloyl group, acryloyl group, or crotonyl group, and one carboxyl group, sulphonyl group, or phosphoryl group.

18. A thermoplastics resin product according to claim 1, **characterised in that** the component (B) is synthesised by reacting a compound having a double bond and a hydroxyl group in the same molecule, with a cyclic acid anhydride corresponding to its hydroxyl equivalent.

19. A thermoplastics resin product according to claim 1, **characterised in that** the component (B) is at least one compound selected from the group consisting of an alkylene oxide derivative of acid anhydride-carboxylated methacrylic or acrylic acid, a caprolactone derivative of acid anhydridecarboxylated methacrylic or acrylic acid, a monoglycidyl ether derivative of acid anhydride-carboxylated methacrylic or acrylic acid, an acid anhydride-carboxylated methylol methacrylic or acrylic amide, methacryloxyethylphosphate or acryloxyethylphosphate, methacryloxyethylphosphorylphenyl or acryloxyethylphosphorylphenyl, dimethacryloxyethylphosphate or diacryloxyethylphosphate, methacryloxyethylsulphonate or acryloxyethylsulphonate, and dimethacryloxyethylsuccinylsulphonate or diacryloxyethylsuccinylsulphonate.

20. A thermoplastics resin product according to claim 19, **characterised in that** the acid anhydride component is at least one compound selected from the group consisting of saturated or unsaturated aliphatic dicarboxylic anhydrides, alicyclic dicarboxylic anhydrides, aromatic dicarboxylic anhydrides and tricarboxylic anhydrides.

21. A thermoplastics resin product according to claim 19, **characterised in that** the acid anhydride component is succinic anhydride, maleic anhydride, dodecylsuccinic anhydride, phthalic anhydride, tetrahydrophthalic anhydride or a mixture of at least two in these anhydrides.

22. A thermoplastics resin product according to claim 1, **characterised in that** the component (C) is at least one polycarboxylic ester, wherein 2 to 10 acid groups are present and at least two double bonds are pendent from the carboxylic ester selected from the group consisting of polycarboxylic esters (or carboxylic esters) which contain at least two vinyl groups, allyl groups, methacryloyl groups, acryloyl groups or crotonyl groups, and 2 to 10 carboxyl groups, sulphonyl groups, or phosphoryl groups.

23. A thermoplastics resin product according to claim 1, **characterised in that** the component (C) is synthesised by reacting an epoxy-acrylate or methacrylate with a cyclic acid anhydride, wherein the epoxy-acrylate or methacrylate is obtained by ring-opening esterification of a poly-epoxy compound and a methacrylic acid or acrylic acid.

24. A thermoplastics resin product according to claim 23, **characterised in that** the epoxy-acrylate or methacrylate is at least one compound selected from the group consisting of a methacrylic or acrylic acid derivative of neopentyl glycol diglycidyl ether, a methacrylic or acrylic acid derivative of 1,6-hexanediol diglycidyl ether, a methacrylic or acrylic acid derivative of trimethylol propane triglycidyl ether, a methacrylic or acrylic acid derivative of bisphenol A glycidyl ether, a methacrylic or acrylic acid derivative of epoxyphenolnovolak, and a methacrylic or acrylic acid derivative of phthalic acid diglycidyl ester.

25. A thermoplastics resin product according to claim 23, **characterised in that** the acid anhydride component is succinic anhydride, maleic anhydride, dodecylsuccinic anhydride, phthalic anhydride, trimellitic anhydride, tetrahydrophthalic anhydride or a mixture of at least two in these anhydrides.

26. A thermoplastics resin product according to claim 1, **characterised in that** the component (E) is at least one compound selected from the group consisting of dihydric alcohol dimethacrylates or diacrylates, trihydric alcohol trimethacrylates or triacrylates, polyhydric alcohol methacrylates or acrylates, epoxy methacrylates or acrylates, urethane methacrylates or acrylates, polyester methacrylates or acrylates, polyether methacrylates or acrylates, polybutadiene polyol urethane methacrylates or acrylates and polybutadiene polyol methacrylates or acrylates.

27. A thermoplastics resin product according to claim 1, **characterised in that** the component (F) is selected from the group consisting of 2-ethylhexyl methacrylate or acrylate, cyclohexyl methacrylate or acrylate, dicyclopentanyl methacrylate or acrylate, benzyl methacrylate or acrylate, phenoxyethyl methacrylate or acrylate, tolyloxyethyl methacrylate or acrylate, ethoxyethyl methacrylate or acrylate, ethylcarbitol methacrylate or acrylate, isobornyl methacrylate or acrylate, methoxypropylene glycol methacrylate or acrylate, methacryloylmorpholine, acryloylmorpholine, N-vinylpyrrolidone, N-vinylcaprolactam, N,N-diethylaminoethyl methacrylate or acrylate, t-butylaminoethyl methacrylate or acrylate, 2-hydroxyethyl methacrylate or acrylate, 2-hydroxypropyl methacrylate or acrylate, 3-butoxy-2-hydroxypropyl methacrylate or acrylate, caprolactone-modified 2-hydroxyethyl methacrylate or acrylate, 3-phenoxy-2-hydroxypropyl methacrylate or acrylate, glycidyl methacrylate or acrylate, and ethylene oxide-modified butoxylated phosphoric acid methacrylate or acrylate.

28. A method for printing a plastics material product, which comprises (I) painting with a radiation-curable type printing ink which comprises a vehicle mixture containing:
(A) at least one ingredient selected from the group consisting of a linear polyester oligomer substantially free of an acid group and free of a polymerisable double bond on the linear polyester chain, wherein 1 to 10 double bonds are pendent from the linear polyester chain; a linear polyester polymer substantially free of an acid group and free of a polymerisable double bond on the linear polyester chain, wherein 1 to 10 double bonds are pendent from the linear polyester chain; and mixtures thereof,
(B) at least one ingredient selected from the group consisting of a one double bond-containing carboxylic acid wherein the acid has at least one acid group, a carboxylic ester of the said acid, a carboxylic amide of the said acid, and mixtures thereof,
(C) a double bond-containing polycarboxylic ester wherein 2 to 10 acid groups are present and at least 2 double bonds are pendent from the carboxylic ester having 2 to 10 acid groups,
(D) at least one ingredient selected from the group consisting of a double bond-containing fluorinated carboxylic ester, a block copolymer comprising a fluorinated alkyl group-containing polymer segment and a methacrylic or acrylic polymer segment, a block copolymer comprising a siloxane group-containing polymer segment and a methacrylic or acrylic polymer segment, and mixtures thereof,
(E) a double bond-containing carboxylic ester, having at least 2 double bonds and free of an acid group, provided that it is excluded from the above-mentioned component (A) and
(F) at least one ingredient selected from the group consisting of a one double bond-containing carboxylic ester free of an acid group; a one double bond-containing carboxylic amide free of an acid group; a one double bond-containing carboxylic imide free of an acid group; and mixtures thereof,
wherein the acid value of the vehicle mixture is from 5 to 100, and (II) treating the printed surface thereof with radiation to cure the printing ink.

29. A method according to claim 28, **characterised in that** the radiation-curable type printing ink composition further comprises:
(i) 0 to 20 parts by weight of a photopolymerisation initiator,
(ii) 0 to 20 parts by weight of a photosensitiser and
(iii) 0 to 50 wt% of an organic and/or inorganic pigment per total ink composition.

30. A method according to claim 29, **characterised in that** the thermoplastics resin product is a polyethylene terephthalate product.

31. A method according to claim 29, **characterised in that** the component; (D) is a fluorinated alcoholic residue-containing ester or a fluorinated macro-monomer wherein the main chain has a fluorinated group and the side chain is a pendent acryloyl or methacryloyl group.

32. A method according to claim 29, **characterised in that** the component (D) is at least one methacrylate or acrylate ester selected from the group consisting of trifluoroethyl methacrylate or acrylate, tetrafluoropropyl methacrylate or acrylate, octafluoropentyl methacrylate or acrylate and heptadecafluorodecyl methacrylate or acrylate.

33. A method according to claim 30, **characterised in that** the component (D) is the mixture of two or three members selected from the group consisting of
(1) a double bond-containing fluorinated carboxylic ester,
(2) a block copolymer which comprises a fluorinated alkyl group-containing polymer segment and a methacrylic or acrylic polymer segment, and
(3) a block copolymer which comprises a siloxane group-containing polymer segment and a methacrylic or acrylic polymer segment.

34. A method according to claim 30, **characterised in that** a surface of the thermoplastics resin product may be untreated, roughened or treated with flame, corona discharge or anchor coating before printing.

## Patentansprüche

1. Ein bedrucktes thermoplastisches Harzprodukt, auf das (I) eine strahlungshärtbare Druckfarbe aufgetragen ist, die ein Trägergemisch aufweist, das enthält:
(A) mindestens einen aus der Gruppe gewählten Bestandteil, die sich zusammensetzt aus einem linearen Polyesteroligomer, das im wesentlichen keine Säuregruppe und keine polymerisierbare Doppelbindung an der linearen Polyesterkette aufweist, wobei 1 bis 10 Doppelbindungen an die lineare Polyesterkette gekoppelt sind; einem linearen Polyesterpolymer, das im wesentlichen keine Säuregruppe und keine polymerisierbare Doppelbindung an der linearen Polyesterkette aufweist, wobei 1 bis 10 Doppelbindungen an die lineare Polyesterkette gekoppelt sind; sowie Mischungen daraus,
(B) mindestens einen aus der Gruppe gewählten Bestandteil, die sich zusammensetzt aus einer eine Doppelbindung enthaltenden Carbonsaure, wobei die Säure mindestens eine Säuregruppe hat, einem Carbonsäureester der genannten Säure, einem Carbonsäureamid der genannten Säure sowie Mischungen daraus,
(C) einen Doppelbindungen aufweisenden Polycarbonsäureester, bei dem 2 bis 10 Säuregruppen vorhanden sind und mindestens 2 Doppelbindungen an den Carbonsäureester gekoppelt sind, der 2 bis 10 Säuregruppen aufweist,
(D) mindestens einen aus der Gruppe gewählten Bestandteil, die sich zusammensetzt aus einem Doppelbindungen enthaltenden, fluorierten Carbonsäureester, einem Blockcopolymer aufweisend ein fluorierte Alkylgruppen enthaltendes polymersegment und ein Methacryl- oder Acrypolymersegment, einem Blockcopolymer aufweisend ein Siloxangruppen enthaltendes Polymersegment und ein Methacryl- oder Acrylpolymersegment, sowie Mischungen daraus,
(E) einen Doppelbindungen aufweisenden Carbonsäureester, der mindestens 2 Doppelbindungen aufweist und keine Säuregruppe enthält, vorausgesetzt, daß dieser aus der oben angegebenen Komponente (A) ausgeschlossen ist, und
(F) mindestens einen aus der Gruppe ausgewählten Bestandteil, die sich zusammensetzt aus einem eine Doppelbindung aufweisenden und keine Säuregruppe enthaltenden Carbonsäureester; einem eine Doppelbindung aufweisenden und keine Säuregruppe enthaltenden Carbonsäureamid; einem eine Doppelbindung aufweisenden und keine Säuregruppe enthaltenden Carbonsäureimid; sowie Mischungen daraus,
wobei die Säurezahl des Trägergemisches zwischen 5 und 100 liegt, und (II) dessen mit Druckfarbe behandelte Oberfläche zum Zwecke der Härtung einer Strahlung ausgesetzt wird.

2. Ein bedrucktes thermoplastisches Harzprodukt gemäß Anspruch 1, **dadurch gekennzeichnet, daß** die strahlungshärtbare Druckfarbzusammensetzung weiterhin enthält:
(i) 0 bis 20 Gewichtsteile eines Photopolymerisationsinitiators,
(ii) 0 bis 20 Gewichtsteile eines Photosensibilisators und
(iii) 0 bis 50 Gewichtsprozent eines organischen bzw. anorganischen Pigments, bezogen auf die gesamte Druckfarbzusammensetzung.

3. Ein thermoplastisches Harzprodukt gemäß Anspruch 1, **dadurch gekennzeichnet, daß** das thermoplastische Harzprodukt ein Polyethylenterephthalatprodukt mit einer zum Bedrucken aufgerauhten Oberfläche ist.

4. Ein thermoplastisches Harzprodukt gemäß Anspruch 1, **dadurch gekennzeichnet, daß** das thermoplastische Harzprodukt ein Behälter für Kosmetika und Toilettenartikel, für Gewürze in flüssiger Form, für Getränke, für medizinische Produkte oder für flüssige Reinigungsmittel ist.

5. Ein thermoplastisches Harzprodukt gemäß Anspruch 1, **dadurch gekennzeichnet, daß** der Doppelbindungen aufweisende fluorierte Carbonsäureester der Komponente (D) ein fluorierter, Alkoholrückstände aufweisender Ester oder ein fluoriertes Makromonomer ist, wobei die Hauptkette eine fluorierte Gruppe aufweist und die Seitenkette eine gekoppelte Acryloyl- oder Methacryloylgruppe ist.

6. Ein thermoplastisches Harzprodukt gemäß Anspruch 1, **dadurch gekennzeichnet, daß** der fluorierte Carbonsäureester der Komponente (D) mindestens ein aus der Gruppe ausgewählter Methacrylat- oder Acrylatester ist, die sich zusammensetzt aus Trifluoroethylmethacrylat oder -acrylat, Tetrafluoropropylmethacrylat oder -acrylat, Octafluoropentylmethacrylat oder -acrylat und Heptadecafluorodecylmethacrylat oder -acrylat.

7. Ein thermoplastisches Harzprodukt gemäß Anspruch 6, **dadurch gekennzeichnet, daß** der Carbonsäureester der Komponente (D) in einem Bereich von 1 bis 20 Gewichtsteilen pro 100 Teile des Trägergemisches vorliegt.

8. Ein thermoplastisches Harzprodukt gemäß Anspruch 1, **dadurch gekennzeichnet, daß** das Blockcopolymer der Komponente (D) in einem Bereich von 1 bis 10 Gewichtsteilen pro 100 Teile des Trägergemisches vorliegt.

9. Ein thermoplastisches Harzprodukt gemäß Anspruch 1, **dadurch gekennzeichnet, daß** das Blockcopolymer der Komponente (D) in einem Bereich von 0,5 bis 10 Gewichtsteilen pro 100 Teile des Trägergemisches vorliegt.

10. Ein thermoplastisches Harzprodukt gemäß Anspruch 1, **dadurch gekennzeichnet, daß** die Komponente (D) eine Mischung aus zwei oder drei Elementen aus der Gruppe ist, die sich zusammensetzt aus
(1) einem Doppelbindungen aufweisenden fluorierten Carbonsäureester,
(2) einem Blockcopolymer bestehend aus einem fluorierte Alkylgruppen enthaltenden Polymersegment und einem Methacryl- oder Acrylpolymersegment, und
(3) einem Blockcopolymer bestehend aus einem Siloxangruppen enthaltenden Polymersegment und einem Methacryl- oder Acrylpolymersegment.

11. Ein thermoplastisches Harzprodukt gemäß Anspruch 10, **dadurch gekennzeichnet, daß** die Gesamtmenge der Mischung der Komponente (D) in einem Bereich von 1 bis 10 Gewichtsteilen pro 100 Teile des Trägergemisches liegt.

12. Ein thermoplastisches Harzprodukt gemäß Anspruch 1, **dadurch gekennzeichnet, daß** die Komponente (A) aus Oligomeren oder Polymeren ausgewählt ist, die mindestens eine Vinyl-, Allyl-, Methacryloyl-, Acryloyl- oder Crotonylgruppe aufweisen.

13. Ein thermoplastisches Harzprodukt gemäß Anspruch 1, **dadurch gekennzeichnet, daß** die Komponente (A) aus mindestens einem Oligomer oder Polymer besteht, die klassifiziert sind als Urethanmethacrylate oder -acrylate abgeleitet von einer linearen Polyesterpolyolverbindung, die frei von polymerisierbaren Doppelbindungen an der linearen Polyolkette ist, einer Polyisocyanatverbindung und einer Verbindung mit einer Methacryloyl- oder Acryloylgruppe und einer aktiven Wasserstoffgruppe als Ausgangsstoff.

14. Ein thermoplastisches Harzprodukt gemäß Anspruch 13, **dadurch gekennzeichnet, daß** die lineare Polyesterpolyolverbindung aus einer Dicarbonsäurekomponente und einer Glykolkomponente synthetisiert ist, wobei die Dicarbonsäurekomponente mindestens aus einer Verbindung aus der Gruppe besteht, die sich zusammensetzt aus einer aromatischen Dicarbonsäure, einer aliphatischen Dicarbonsäure, einer alicyklischen Dicarbonsäure und einer heterocyklischen Dicarbonsäure, und die Glykolkomponente aus der Gruppe ausgewählt ist, die sich zusammensetzt aus einem Alkylenglykol, Dialkylenglykol, Cyclohexandimethanol, Spiroglykol, 1,4-Phenylenglykol, Bisphenol-A-Ethylenoxid oder Polyethylenoxid und Polyethylenglykol.

15. Ein thermoplastisches Harzprodukt gemäß Anspruch 13, **dadurch gekennzeichnet, daß** die Polyisocyanatverbindung mindestens aus einer Verbindung aus der Gruppe besteht, die sich zusammensetzt aus 2,4-Trilendiisocyanat, Diphenylmethandiisocyanat, 1,3-Diisocyanatmethylcyclohexan, 1,4-Diisocyanatmethylcyclohexan, 4,4'-Diisocyanatdicyclohexan, 4,4'-Diisocyanatdicyclohexylmethan und Isophorondiisocyanat.

16. Ein thermoplastisches Harzprodukt gemäß Anspruch 13, **dadurch gekennzeichnet, daß** die Verbindung mit einer Methacryloyl- oder Acryloylgruppe und einer aktiven Wasserstoffgruppe mindestens aus einer Verbindung aus der Gruppe besteht, die sich zusammensetzt aus zweiwertigem Alkoholmonomethacrylat oder -monoacrylat, dreiwertigem Alkoholmono- oder -dimethacrylat oder dreiwertigem Alkoholmono- oder -diacrylat, mehrwertigem Alkoholmethacrylat oder -acrylat, das mindestens eine Hydroxygruppe aufweist, einem mindestens eine Hydroxygruppe enthaltenden Methacrylat oder Acrylat eines Alkohols mit 4 oder mehr Hydroxygruppen, einer eine Hydroxygruppe enthaltenden Verbindung, abgeleitet aus der Bildung eines Methacrylats oder Acrylats aus einem Caprolactonderivat jedweder der oben angegebenen Alkoholverbindungen, und Epoxymethacrylaten oder -acrylaten, abgeleitet aus einer ringöffnenden Addition einer Methacryl- oder Acrylsäure mit einem Glycidyletherderivat aus zweiwertigen oder mehrwertigen Alkoholen oder phenolischen Hydroxygruppen enthaltenden Verbindungen.

17. Ein thermoplastisches Harzprodukt gemäß Anspruch 1, **dadurch gekennzeichnet, daß** die Komponente (B) mindestens aus einem aus der Gruppe ausgewähltem Monomer besteht, die sich zusammensetzt aus Monomeren mit einer Vinylgruppe, Allylgruppe, Methacryloylgruppe, Acryloylgruppe oder Crotonylgruppe und einer Carboxylgruppe, Sulfonylgruppe oder Phosphorylgruppe.

18. Ein thermoplastisches Harzprodukt gemäß Anspruch 1, **dadurch gekennzeichnet, daß** die Komponente (B) aus der Reaktion einer Verbindung, die eine Doppelbindung und eine Hydroxylgruppe im selben Molekül aufweist, mit einem cyclischen Säureanhydrid, entsprechend dem Hydroxyläquivalent synthetisiert ist.

19. Ein thermoplastisches Harzprodukt gemäß Anspruch 1, **dadurch gekennzeichnet, daß** die Komponente (B) mindestens aus einer aus der Gruppe ausgewählten Verbindung besteht, die sich zusammensetzt aus einem Alkylenoxidderivat aus einer säureanhydridcarboxylierten Methacryl- oder Acrylsäure, einem Caprolactonderivat aus einer säureanhydridcarboxylierten Methacryl- oder Acrylsäure, einem Monoglycidyletherderivat aus einer säureanhydridcarboxylierten Methacryl- oder Acrylsäure, einem säureanhydridcarboxylierten Methyloylmethacryl- oder -acrylamid, Methacryloxyethylphosphat oder Acryloxyethylphosphat, Methacryloxyethylphosphorylphenyl oder Acryloxyethylphosphorylphenyl, Dimethacryloxyethylphosphat oder Diacryloxyethylphosphat, Methacryloxyethylsulfonat oder Acryloxyethylsulfonat und Dimethacryloxyethylsuccinylsulfonat oder Diacryloxyethylsuccinylsulfonat.

20. Ein thermoplastisches Harzprodukt gemäß Anspruch 19, **dadurch gekennzeichnet, daß** die Säureanhydridkomponente mindestens aus einer aus der Gruppe ausgewählten Verbindung besteht, die sich zusammensetzt aus gesättigten oder ungesättigten aliphatischen Dicarbonsäureanhydriden, alicyklischen Dicarbonsäureanhydriden, aromatischen Dicarbonsäureanhydriden und Tricarbonsäureanhydriden.

21. Ein thermoplastisches Harzprodukt gemäß Anspruch 19, **dadurch gekennzeichnet, daß** die Säureanhydridkomponente ein Bernsteinsäureanhydrid, Maleinsäureanhydrid, Dodecylsuccinanhydrid, Phthalsäureanhydrid, Tetrahydrophthalsäureanhydrid oder eine Mischung aus mindestens zwei dieser Anhydride ist.

22. Ein thermoplastisches Harzprodukt gemäß Anspruch 1, **dadurch gekennzeichnet, daß** die Komponente (C) mindestens ein Polycarbonsäureester ist, wobei 2 bis 10 Säuregruppen vorhanden sind und mindestens zwei Doppelbindungen an den Carbonsäureester gekoppelt sind, der aus der Gruppe ausgewählt wird, die sich zusammensetzt aus Polycarbonsäureestern (oder Carbonsäureestern), die mindestens zwei Vinylgruppen, Allylgruppen, Methacryloylgruppen, Acryloylgruppen oder Crotonylgruppen enthalten und 2 bis 10 Carboxylgruppen, Sulfonylgruppen oder Phosphorylgruppen.

23. Ein thermoplastisches Harzprodukt gemäß Anspruch 1, **dadurch gekennzeichnet, daß** die Komponente (C) aus der Reaktion eines Epoxyacrylats oder -methacrylats mit einem cyclischen Säureanhydrid synthetisiert ist, wobei das Epoxyacrylat oder -methacrylat durch die ringöffnende Veresterung einer Polyepoxyverbindung und einer Methacrylsäure oder Acrylsäure erzeugt ist.

24. Ein thermoplastisches Harzprodukt gemäß Anspruch 23, **dadurch gekennzeichnet, daß** das Epoxyacrylat oder -methacrylat mindestens aus einer aus der Gruppe gewählten Verbindung besteht, die sich zusammensetzt aus einem Methacryl- oder Acrylsäurederivat aus Neopentylglykoldiglycidylether, einem Methacryl- oder Acrylsäurederivat aus 1,6-Hexandioldiglycidylether, einem Methacryl- oder Acrylsäurederivat aus Trimethylolpropantriglycidylether, einem Methacryl- oder Acrylsäurederivat aus Bisphenol-A-Glycidylether, einem Methacryl- oder Acrylsäurederivat aus Epoxyphenolnovolak und einem Methacryl- oder Acrylsäurederivat aus Phthalsäurediglycidylester.

25. Ein thermoplastisches Harzprodukt gemäß Anspruch 23, **dadurch gekennzeichnet, daß** die Säureanhydridkomponente ein Bernsteinsäureanhydrid, Maleinsäureanhydrid, Dodecylsuccinanhydrid, Phthalsäureanhydrid, Trimellitsäureanhydrid, Tetrahydrophtalsäureanhydrid oder eine Mischung aus mindestens zwei dieser Anhydride ist.

26. Ein thermoplastisches Harzprodukt gemäß Anspruch 1, **dadurch gekennzeichnet, daß** die Komponente (E) mindestens aus einer aus der Gruppe gewählten Verbindung besteht, die sich zusammensetzt aus zweiwertigen Alkoholdimethacrylaten oder -diacrylaten, dreiwertigen Alkoholtrimethacrylaten oder -triacrylaten, mehrwertigen Alkoholmethacrylaten oder -acrylaten, Epoxymethacrylaten oder -acrylaten, Urethanmethacrylaten oder -acrylaten, Polyestermethacrylaten oder -acrylaten, Polyethermethacrylaten oder -acrylaten, Polybutadienpolyolurethanmethacrylaten oder -acrylaten und Polybutadienpolyolmethacrylaten oder -acrylaten.

27. Ein thermoplastisches Harzprodukt gemäß Anspruch 1, **dadurch gekennzeichnet, daß** die Komponente (F) aus der Gruppe ausgewählt wird, die sich zusammensetzt aus 2-Ethylhexylmethacrylat oder -acrylat, Cyclohexylmethacrylat oder -acrylat, Dicyclopentanylmethacrylat oder -acrylat, Benzylmethacrylat oder -acrylat, Phenoxyethylmethacrylat oder -acrylat, Tolyloxyethylmethacrylat oder -acrylat, Ethoxyethylmethacrylat oder -acrylat, Ethylcarbitolmethacrylat oder -acrylat, Isobornylmethacrylat oder -acrylat, Methoxypropylenglykolmethacrylat oder -acrylat, Methacryloylmorpholin, Acryloylmorpholin, *N*-Vinylpyrrolidon, *N*-Vinylcaprolactam, *N,N*-Diethylaminoethylmethacrylat oder -acrylat, *t*-Butylaminoethylmethacrylat oder -acrylat, 2-Hydroxyethylmethacrylat oder -acrylat, 2-Hydroxypropylmethacrylat oder -acrylat, 3-Butoxy-2-Hydroxypropylmethacrylat oder -acrylat, caprolacton-modifiziertem 2-Hydroxyethylmethacrylat oder -acrylat, 3-Phenoxy-2-Hydroxypropylmethacrylat oder -acrylat, Glycidylmethacrylat oder -acrylat und ethylenoxidmodifiziertem, butoxyliertem Phosphorsäuremethacrylat oder -acrylat.

28. Ein Verfahren zum Bedrucken eines Harzprodukts, das (I) Auftragen einer strahlungshärtbaren Druckfarbe beinhaltet, die ein Trägergemisch aufweist, das folgende Komponenten enthält:
(A) mindestens einen aus der Gruppe gewählten Bestandteil, die sich zusammensetzt aus einem linearen Polyesteroligomer, das im wesentlichen keine Säuregruppe und keine polymerisierbare Doppelbindung an der linearen Polyesterkette aufweist, wobei 1 bis 10 Doppelbindungen an die lineare Polyesterkette gekoppelt sind; einem linearen Polyesterpolymer, das im wesentlichen keine Säuregruppe und keine polymerisierbare Doppelbindung an der linearen Polyesterkette aufweist, wobei 1 bis 10 Doppelbindungen an die lineare Polyesterkette gekoppelt sind; sowie Mischungen daraus,
(B) mindestens einen aus der Gruppe gewählten Bestandteil, die sich zusammensetzt aus einer eine Doppelbindung aufweisenden Carbonsäure, wobei die Säure mindestens eine Säuregruppe hat, einem Carbonsäureester der genannten Säure, einem Carbonsäureamid der genannten Säure sowie Mischungen daraus,
(C) einen Doppelbindungen aufweisenden Polycarbonsäureester, bei dem 2 bis 10 Säuregruppen vorhanden sind und mindestens 2 Doppelbindungen an den Carbonsäureester gekoppelt sind, der 2 bis 10 Säuregruppen aufweist,
(D) mindestens einen aus der Gruppe gewählten Bestandteil, die sich zusammensetzt aus einem Doppelbindungen enthaltenden, fluorierten Carbonsäureester, einem Blockcopolymer aufweisend ein fluorierte Alkylgruppen enthaltendes Polymersegment und ein Methacryl- oder Acrylpolymersegment, einem Blockcopolymer aufweisend ein Siloxangruppen enthaltendes Polymersegment und ein Methacryl- oder Acrylpolymersegment, sowie Mischungen daraus,
(E) ein Doppelbindungen aufweisenden Carbonsäureester, der mindestens 2 Doppelbindungen aufweist und keine Säuregruppe enthält, vorausgesetzt, daß dieser aus der oben angegebenen Komponente (A) ausgeschlossen ist, und
(F) mindestens einen aus der Gruppe ausgewählten Bestandteil, die sich zusammensetzt aus einem eine Doppelbindung aufweisenden und keine Säuregruppe enthaltenden Carbonsäureester; einem eine Doppelbindung aufweisenden und keine Säuregruppe enthaltenden Carbonsäureamid; einem eine Doppelbindung aufweisenden und keine Säuregruppe enthaltenden Carbonsäureimid; sowie Mischungen daraus,
wobei die Säurezahl des Trägergemisches zwischen 5 und 100 liegt, und (II) dessen mit Druckfarbe behandelte Oberfläche zum Zwecke der Härtung einer Strahlung ausgesetzt wird.

29. Ein Verfahren gemäß Anspruch 28, **dadurch gekennzeichnet, daß** die strahlungshärtbare Druckfarbzusammensetzung weiterhin aufweist:
(i) 0 bis 20 Gewichtsteile eines Photopolymerisationsinitiators,
(ii) 0 bis 20 Gewichtsteile eines Photosensibilisators und
(iii) 0 bis 50 Gewichtsprozent eines organischen bzw. anorganischen Pigments bezogen auf die gesamte Druckfarbzusammensetzung.

30. Ein Verfahren gemäß Anspruch 29, **dadurch gekennzeichnet, daß** das thermoplastische Harzprodukt ein Produkt aus Polyethylenterephthalat ist.

31. Ein Verfahren gemäß Anspruch 29, **dadurch gekennzeichnet, daß** die Komponente (D) ein fluorierter, Alkoholrückstände aufweisender Ester oder ein fluoriertes Makromonomer ist, wobei die Hauptkette eine fluorierte Gruppe aufweist und die Seitenkette eine gekoppelte Acryloyl- oder Methacryloylgruppe ist.

32. Ein Verfahren gemäß Anspruch 29, **dadurch gekennzeichnet, daß** die Komponente (D) mindestens ein Methacrylat- oder Acrylatester ist, der aus der Gruppe ausgewählt wird, die aus Trifluoroethylmethacrylat oder -acrylat, Tetrafluoropropylmethacrylat oder -acrylat, Octafluoropentylmethacrylat oder -acrylat und Heptadecafluorodecylmethacrylat oder -acrylat besteht.

33. Ein Verfahren gemäß Anspruch 30, **dadurch gekennzeichnet, daß** die Komponente (D) eine Mischung aus zwei oder drei gewählten Bestandteilen aus der Gruppe ist, die sich zusammensetzt aus
(1) einem Doppelbindungen aufweisenden, flurorierten Carbonsäureester,
(2) einem Blockcopolymer bestehend aus einem fluorierte Alkylgruppen enthaltenden Polymersegment und einem Methacryl- oder Acrylpolymersegment, und
(3) einem Blockcopolymer bestehend aus einem Siloxangruppen enthaltenden Polymersegment und einem Methacryl- oder Acrylpolymersegment.

34. Ein Verfahren gemäß Anspruch 30, **dadurch gekennzeichnet, daß** eine Oberfläche des thermoplastischen Harzprodukts vor dem Drucken unbehandelt sein kann, aufgerauht oder mit einer Flamme oder Coronaentladung behandelt oder mit einer Kupplungsschicht versehen sein kann.

## Revendications

1. Produit imprimé de résine thermoplastique, qui est (I) imprimé avec une encre d'imprimerie du type durcissable sous l'effet d'un rayonnement, qui comprend un mélange de véhicules contenant :
(A) au moins un ingrédient choisi dans le groupe comprenant les oligomères de polyesters linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; les polymères de polyesters linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; et leurs mélanges,
(B) au moins un ingrédient choisi dans le groupe comprenant les acides carboxyliques contenant une double liaison, où l'acide possède au moins un groupe acide, les esters desdits acides carboxyliques, les amides desdits acides carboxyliques et leurs mélanges,
(C) un ester d'un acide polycarboxylique contenant une double liaison, où de 2 à 10 groupes acides sont présents, et au moins 2 doubles liaisons sont en position latérale par rapport à l'ester d'acide carboxylique ayant de 2 à 10 groupes acides,
(D) au moins un ingrédient choisi dans le groupe comprenant les esters d'acides carboxyliques fluorés ayant une double liaison, les copolymères séquencés comprenant un segment polymère contenant un groupe alkyle fluoré et un segment polymère méthacrylique ou acrylique, les copolymères séquencés comprenant un segment polymère contenant un groupe siloxane et un segment polymère méthacrylique ou acrylique, et leurs mélanges,
(E) un ester d'acide carboxylique contenant une double liaison, ayant au moins 2 doubles liaisons et exempt de groupes acides, à la condition qu'il soit exclu du composant (A) mentionné ci-dessus, et
(F) au moins un ingrédient choisi dans le groupe comprenant les esters d'acides carboxyliques contenant une double liaison et exempts de groupes acides ; un carboxamide contenant une double liaison et exempt de groupes acides ; un carboximide contenant une double liaison et exempt de groupes acides ; et leurs mélanges,
où l'indice d'acide du mélange de véhicules est de 5 à 100, et (II) traité par un rayonnement sur sa surface imprimée, pour durcir l'encre d'imprimerie.

2. Produit imprimé de résine thermoplastique selon la revendication 1, caractérisé en ce que la composition d'encre d'imprimerie du type durcissable sous l'effet d'un rayonnement comprend en outre :
(i) de 0 à 20 parties en poids d'un amorceur de photopolymérisation,
(ii) de 0 à 20 parties en poids d'un photosensibilisateur, et
(iii) de 0 à 50 % en poids d'un pigment organique et/ou minéral, par rapport à la totalité de la composition d'encre.

3. Produit de résine thermoplastique selon la revendication 1, caractérisé en ce que le produit de résine thermoplastique est un produit de poly(téréphtalate d'éthylène) ayant une surface rendue rugueuse pour permettre l'impression.

4. Produit de résine thermoplastique selon la revendication 1, caractérisé en ce que le produit de résine thermoplastique est un récipient pour produits cosmétiques et produits de toilette, pour assaisonnements liquides, pour boissons, pour médicaments ou pour détergents liquides.

5. Produit de résine thermoplastique selon la revendication 1, caractérisé en ce que l'ester d'acide carboxylique fluoré contenant une double liaison et correspondant au composant (D) est un ester contenant un résidu alcoolique fluoré ou un macromonomère fluoré, dans lequel la chaîne principale possède un groupe fluoré et la chaîne latérale est un groupe acryloyle ou méthacryloyle latéral.

6. Produit de résine thermoplastique selon la revendication 1, caractérisé en ce que l'ester d'acide carboxylique fluoré correspondant au composant (D) est au moins un ester méthacrylate ou acrylate choisi dans le groupe comprenant le méthacrylate ou l'acrylate de trifluoréthyle, le méthacrylate ou l'acrylate de tétrafluoropropyle, le méthacrylate ou l'acrylate d'octafluoropentyle, et le méthacrylate ou l'acrylate d'heptadécafluorodécyle.

7. Produit de résine thermoplastique selon la revendication 6, caractérisé en ce que l'ester d'acide carboxylique correspondant au composant (D) est présent en une quantité de 1 à 20 parties en poids pour 100 parties en poids du mélange de véhicules.

8. Produit de résine thermoplastique selon la revendication 1, caractérisé en ce que le copolymère séquencé correspondant au composant (D) est présent en une quantité de 1 à 10 parties en poids pour 100 parties en poids du mélange de véhicules.

9. Produit de résine thermoplastique selon la revendication 1, caractérisé en ce que le copolymère séquencé correspondant au composant (D) est présent en une quantité de 0,5 à 10 parties en poids pour 100 parties en poids du mélange de véhicules.

10. Produit de résine thermoplastique selon la revendication 1, caractérisé en ce que le composant (D) est un mélange de deux ou trois membres choisis dans le groupe comprenant
(1) les esters d'acides carboxyliques fluorés contenant une double liaison,
(2) les copolymères séquencés qui comprennent un segment polymère contenant un groupe alkyle fluoré et un segment polymère méthacrylique ou acrylique, et
(3) les copolymères séquencés qui comprennent un segment polymère contenant un groupe siloxane et un segment polymère méthacrylique ou acrylique.

11. Produit de résine thermoplastique selon la revendication 10, caractérisé en ce que la quantité totale du mélange correspondant au composant (D) est comprise entre 1 et 10 parties en poids pour 100 parties en poids du mélange de véhicules.

12. Produit de résine thermoplastique selon la revendication 1, caractérisé en ce que le composant (A) est choisi parmi les oligomères ou polymères qui contiennent au moins un groupe vinyle, allyle, méthacryloyle, acryloyle ou crotonyle.

13. Produit de résine thermoplastique selon la revendication 1, caractérisé en ce que le composant (A) est au moins un oligomère ou un polymère classé parmi les méthacrylates ou acrylates d'uréthanne qui dérivent d'un composé polyesterpolyol linéaire exempt de doubles liaisons polymérisables sur la chaîne polyol linéaire, un composé polyisocyanate, et un composé ayant un groupe méthacryloyle ou acryloyle et un groupe hydrogène actif en tant que composés de départ.

14. Produit de résine thermoplastique selon la revendication 13, caractérisé en ce que le composé polyesterpolyol linéaire est synthétisé à partir d'un composant acide dicarboxylique et d'un composant glycol, où le composant acide dicarboxylique est au moins un composé choisi dans le groupe comprenant les acides dicarboxyliques aromatiques, les acides dicarboxyliques aliphatiques, les acides dicarboxyliques alicycliques et les acides dicarboxyliques hétérocycliques, et le composant glycol est choisi dans le groupe comprenant les alkylèneglycols, les dialkylèneglycols, le cyclohexanediméthanol, le spiroglycol, le 1,4-phénylèneglycol, le bisphénol A, l'oxyde d'éthylène ou le poly(oxyde d'éthylène), et le polyéthylèneglycol.

15. Produit de résine thermoplastique selon la revendication 13, caractérisé en ce que le composé polyisocyanate est au moins un composé choisi dans le groupe comprenant le diisocyanate de 2,4-toluylène, le diisocyanate de diphénylméthane, le 1,3-diisocyanato-méthylcyclohexane, le 1,4-diisocyanato-méthylcyclohexane, le 4,4'-diisocyanato-dicyclohexane, le 4,4'-diisocyanato-dicylohexylméthane et le diisocyanate d'isophorone.

16. Produit de résine thermoplastique selon la revendication 13, caractérisé en ce que le composé ayant un groupe méthacryloyle ou acryloyle et un groupe hydrogène actif est au moins un composé choisi dans le groupe comprenant les monométhacrylates ou monoacrylates de dialcools, les mono- ou diméthacrylates ou mono- ou diacrylates de trialcools, les méthacrylates ou acrylates de polyalcools ayant au moins un groupe hydroxy, les méthacrylates ou acrylates, contenant au moins un groupe hydroxy, d'alcools contenant au moins 4 groupes hydroxy, les composés hydroxylés obtenus par méthacrylation ou acrylation d'un dérivé de caprolactone de l'un quelconque des composés alcool mentionnés ci-dessus, et les époxyméthacrylates ou -acrylates obtenus par addition par décyclisation d'un acide méthacrylique ou acrylique avec un dérivé d'un éther glycidylique de dialcools ou de polyalcools, ou de composés contenant des groupes hydroxy phénoliques.

17. Produit de résine thermoplastique selon la revendication 1, caractérisé en ce que le composant (B) est au moins un monomère choisi dans le groupe comprenant les monomères qui contiennent un groupe vinyle, un groupe allyle, un groupe méthacryloyle, un groupe acryloyle ou un groupe crotonyle, et un groupe carboxyle, un groupe sulfonyle ou un groupe phosphoryle.

18. Produit de résine thermoplastique selon la revendication 1, caractérisé en ce que le composant (B) est synthétisé par réaction d'un composé ayant dans la même molécule une double liaison et un groupe hydroxyle, avec un anhydride d'acide cyclique correspondant à son équivalent hydroxyle.

19. Produit de résine thermoplastique selon la revendication 1, caractérisé en ce que le composant (B) est au moins un composé choisi dans le groupe comprenant les dérivés oxyalkylénés de l'acide méthacrylique ou de l'acide acrylique carboxylé par un anhydride d'acide, les dérivés de caprolactone de l'acide méthacrylique ou acrylique carboxylé par un anhydride d'acide, les dérivés éthers monoglycidyliques de l'acide méthacrylique ou de l'acide acrylique carboxylé par un anhydride d'acide, les méthylolméthacrylamides ou méthylolacrylamides carboxylés par un anhydride d'acide, les méthacryloxyéthylphosphates ou acryloxyéthylphosphates, le méthacryloxyéthylphosphorylphényle ou l'acryloxyéthylphosphorylphényle, les diméthacryloxyéthylphosphates ou diacryloxyéthylphosphates, les méthacryloxyéthylsulfonates ou les acryloxyéthylsulfonates, et les diméthacryloxyéthylsuccinylsulfonates ou diacryloxyéthylsuccinylsulfonates.

20. Produit de résine thermoplastique selon la revendication 19, caractérisé en ce que le composant anhydride d'acide est au moins un composé choisi dans le groupe comprenant les anhydrides dicarboxyliques aliphatiques saturés ou insaturés, les anhydrides dicarboxyliques alicycliques, les anhydrides dicarboxyliques aromatiques et les anhydrides tricarboxyliques.

21. Produit de résine thermoplastique selon la revendication 19, caractérisé en ce que le composant anhydride d'acide est l'anhydride succinique, l'anhydride maléique, l'anhydride dodécylsuccinique, l'anhydride phtalique, l'anhydride tétrahydrophtalique ou un mélange d'au moins deux de ces anhydrides.

22. Produit de résine thermoplastique selon la revendication 1, caractérisé en ce que le composant (C) est au moins un ester d'un acide polycarboxylique dans lequel de 2 à 10 groupes acides sont présents et au moins deux doubles liaisons sont en position latérale par rapport à l'ester d'acide carboxylique, choisi dans le groupe comprenant les esters d'acides polycarboxyliques (ou les esters d'acides carboxyliques) qui contiennent au moins deux groupes vinyle, groupes allyle, groupes méthacryloyle, groupes acryloyle ou groupes crotonyle, et de 2 à 10 groupes carboxyle, groupes sulfonyle ou groupes phosphoryle.

23. Produit de résine thermoplastique selon la revendication 1, caractérisé en ce que le composant (C) est synthétisé par réaction d'un époxyacrylate ou d'un époxyméthacrylate avec un anhydride d'acide cyclique, où l'époxyacrylate ou l'époxyméthacrylate est obtenu par estérification par décyclisation d'un composé polyépoxydé et d'un acide méthacrylique ou d'un acide acrylique.

24. Produit de résine thermoplastique selon la revendication 23, caractérisé en ce que l'époxyacrylate ou l'époxyméthacrylate est au moins un composé choisi dans le groupe comprenant les dérivés d'acides méthacryliques ou acryliques de l'éther diglycidylique du néopentylglycol, les dérivés d'acides méthacryliques ou acryliques de l'éther diglycidyliques du 1,6-hexanediol, les dérivés d'acides méthacryliques ou acryliques de l'éther triglycidylique du triméthylolpropane, les dérivés d'acides méthacryliques ou acryliques de l'éther glycidylique du bisphénol A, les dérivés d'acides méthacryliques ou d'acides acryliques d'une novolaque d'époxyphénol, et les dérivés d'acides méthacryliques ou acryliques du phtalate de diglycidyle.

25. Produit de résine thermoplastique selon la revendication 23, caractérisé en ce que le composant anhydride d'acide est l'anhydride succinique, l'anhydride maléique, l'anhydride dodécylsuccinique, l'anhydride phtalique, l'anhydride trimellitique, l'anhydride tétrahydrophtalique ou un mélange d'au moins deux de ces anhydrides.

26. Produit de résine thermoplastique selon la revendication 1, caractérisé en ce que le composant (E) est au moins un composé choisi dans le groupe comprenant les diméthacrylates ou diacrylates de dialcools, les triméthacrylates ou triacrylates de trialcools, les méthacrylates ou acrylates de polyalcools, les époxyméthacrylates ou époxyacrylates, les uréthanneméthacrylates ou uréthanne-acrylates, les méthacrylates ou acrylates de polyester, les méthacrylates ou acrylates de polyéthers, les uréthanneméthacrylates ou uréthanne-acrylates de polybutadiènepolyol, et les méthacrylates ou acrylates de polybutadiènepolyol.

27. Produit de résine thermoplastique selon la revendication 1, caractérisé en ce que le composant (F) est choisi dans le groupe comprenant le méthacrylate ou l'acrylate de 2-éthylhexyle, le méthacrylate ou l'acrylate de cyclohexyle, le méthacrylate ou l'acrylate de dicyclopentanyle, le méthacrylate ou l'acrylate de benzyle, le méthacrylate ou l'acrylate de phénoxyéthyle, le méthacrylate ou l'acrylate de tolyloxyéthyle, le méthacrylate ou l'acrylate d'éthoxyéthyle, le méthacrylate ou l'acrylate d'éthylcarbitol, le méthacrylate ou l'acrylate d'isobornyle, le méthacrylate ou l'acrylate de méthoxypropylèneglycol, la méthacryloylmorpholine, l'acryloylmorpholine, la N-vinylpyrrolidone, le N-vinylcaprolactame, le méthacrylate ou l'acrylate de N,N-diéthylaminoéthyle, le méthacrylate ou l'acrylate de tert-butylaminoéthyle, le méthacrylate ou l'acrylate de 2-hydroxyéthyle, le méthacrylate ou l'acrylate de 2-hydroxypropyle, le méthacrylate ou l'acrylate de 3-butoxy-2-hydroxypropyle, le méthacrylate ou l'acrylate de 2-hydroxyéthyle modifié par la caprolactone, le méthacrylate ou l'acrylate de 3-phénoxy-2-hydroxypropyle, le méthacrylate ou l'acrylate de glycidyle, et le méthacrylate ou l'acrylate de l'acide phosphorique butoxylé modifié par l'oxyde d'éthylène.

28. Procédé pour imprimer un produit d'un matériau plastique, qui consiste (I) à imprimer avec une encre d'imprimerie du type durcissable sous l'effet d'un rayonnement, qui comprend un mélange de véhicules contenant :
(A) au moins un ingrédient choisi dans le groupe comprenant les oligomères de polyester linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; les polymères de polyesters linéaires essentiellement exempts de groupes acides et exempts de doubles liaisons polymérisables sur la chaîne polyester linéaire, où de 1 à 10 doubles liaisons sont en position latérale par rapport à la chaîne polyester linéaire ; et leurs mélanges,
(B) au moins un ingrédient choisi dans le groupe comprenant les acides carboxyliques contenant une double liaison, où l'acide possède au moins un groupe acide, les esters desdits acides carboxyliques, les amides desdits acides carboxyliques et leurs mélanges,
(C) un ester d'un acide polycarboxylique contenant une double liaison, où de 2 à 10 groupes acides sont présents, et au moins 2 doubles liaisons sont en position latérale par rapport à l'ester d'acide carboxylique ayant de 2 à 10 groupes acides,
(D) au moins un ingrédient choisi dans le groupe comprenant les esters d'acides carboxyliques fluorés ayant une double liaison, les copolymères séquencés comprenant un segment polymère contenant un groupe alkyle fluoré et un segment polymère méthacrylique ou acrylique, les copolymères séquencés comprenant un segment polymère contenant un groupe siloxane et un segment polymère méthacrylique ou acrylique, et leurs mélanges,
(E) un ester d'acide carboxylique contenant une double liaison, ayant au moins 2 doubles liaisons et exempt de groupes acides, à la condition qu'il soit exclu du composant (A) mentionné ci-dessus, et
(F) au moins un ingrédient choisi dans le groupe comprenant les esters d'acides carboxyliques contenant une double liaison et exempts de groupes acides ; un carboxamide contenant une double liaison et exempt de groupes acides ; un carboximide contenant une double liaison et exempt de groupes acides ; et leurs mélanges,
où l'indice d'acide du mélange de véhicules est de 5 à 100, et (II) à traiter sa surface imprimée à l'aide d'un rayonnement pour durcir l'encre d'imprimerie.

29. Procédé selon la revendication 28, caractérisé en ce que la composition d'encre d'imprimerie du type durcissable sous l'effet d'un rayonnement comprend en outre :
(i) de 0 à 20 parties en poids d'un amorceur de photopolymérisation,
(ii) de 0 à 20 parties en poids d'un photosensibilisateur, et
(iii) de 0 à 50 % en poids d'un pigment organique et/ou minéral.

30. Procédé selon la revendication 29, caractérisé en ce que le produit de résine thermoplastique est un produit de poly(téréphtalate d'éthylène).

31. Procédé selon la revendication 29, caractérisé en ce que le composant (D) est un ester contenant un résidu alcoolique fluoré ou un macromonomère fluoré, où la chaîne principale possède un groupe fluoré et la chaîne latérale est un groupe acryloyle ou méthacryloyle latéral.

32. Procédé selon la revendication 29, caractérisé en ce que le composant (D) est au moins un ester méthacrylate ou acrylate choisi dans le groupe comprenant le méthacrylate ou l'acrylate de trifluoréthyle, le méthacrylate ou l'acrylate de tétrafluoropropyle, le méthacrylate ou l'acrylate d'octafluoropentyle et le méthacrylate ou l'acrylate d'heptadécafluorodécyle.

33. Procédé selon la revendication 30, caractérisé en ce que le composant (D) est un mélange de deux ou trois membres choisis dans le groupe comprenant
(1) les esters d'acides carboxyliques fluorés contenant une double liaison,
(2) les copolymères séquencés qui comprennent un segment polymère contenant un groupe alkyle fluoré et un segment polymère méthacrylique ou acrylique, et
(3) les copolymères séquencés qui comprennent un segment polymère contenant un groupe siloxane et un segment polymère méthacrylique ou acrylique.

34. Procédé selon la revendication 30, caractérisé en ce qu'une surface du produit de résine thermoplastique peut être non-traitée, rendue rugueuse ou traitée par une flamme, une décharge corona ou un revêtement d'accrochage, avant impression.
